# EUROPÄISCHE PATENTSCHRIFT

(11) **EP 2 698 054 B1**
(45) Veröffentlichungstag und Bekanntmachung des Hinweises auf die Patenterteilung: **12.07.2017**
(21) Anmeldenummer: 13168183.5
(22) Anmeldetag: 17.05.2013
(51) Int. Cl.: A01D 41/127, G06F 3/0485, G06F 3/0486, G06F 3/0484

(54) **Anzeigenvorrichtung für Landmaschinen**
Display device for agricultural machines
Dispositif d'affichage pour machines agricoles

(30) Priorität: 17.08.2012 DE 102012107550
(43) Veröffentlichungstag der Anmeldung: 19.02.2014
(73) Patentinhaber: CLAAS Selbstfahrende Erntemaschinen GmbH, 33428 Harsewinkel (DE)
(72) Erfinder: Losch, Michael, 33775 Versmold (DE); Grevinga, Markus, 48369 Saerbeck (DE)

(56) Entgegenhaltungen:
- EP-A1- 1 650 715
- DE-A1- 10 203 370
- US-A1- 2007 135 977

## Beschreibung

Die Erfindung betrifft eine elektronische Bedien- und Anzeigeeinheit mit einem Display und wenigstens einer Bedieneinheit nach dem Oberbegriff des Anspruchs 1.

Aus dem Stand der Technik sind eine Vielzahl von gattungsgemäßen Anzeigeeinrichtungen bekannt geworden, die zur Visualisierung und Editierung von Prozessen, etwa auf mobilen landwirtschaftlichen Arbeitsmaschinen eingesetzt werden. So ist beispielsweise aus der DE 102 03 370 ein Verfahren zur Steuerung einer Bedienoberfläche bekannt, bei der eine interaktive Bedienoberfläche eine Visualisierung einer Vielzahl von Bedienfenstern ermöglicht. Neben der an sich bekannten überlappenden Darstellung von Anzeigefenstern wird dort vorgeschlagen, dass bei Aktivierung eines weiteren Anzeigefensters das bereits aktivierte Anzeigefenster so verkleinert wird, dass der Inhalt aller aktiven Anzeigefenster sichtbar ist. Derartige Systeme haben vor allem den Nachteil, dass eine Vielzahl von Informationen unmittelbar am Bildschirm auch dann visualisiert sind, wenn deren momentane Überwachung oder Editierung nicht erforderlich ist. Diese Vielzahl von Informationen kann beim Bediener der Maschine auch zu einer Art Reizüberflutung führen, da stets eine erhebliche Anzahl von Informationen zugänglich ist und der Bediener selbst eine Priorisierung vornehmen und berücksichtigen muss, um die wichtigen von den weniger wichtigen Informationen zu unterscheiden. Zudem fällt die Orientierung auf einem derart strukturierten Display schwer, da sich die Bildschirmstruktur ständig ändert.

Aus der EP 1 650 715 ist ein Anzeigeverfahren bekannt geworden, bei dem hinzutretende neue, für den jeweiligen Prozess notwendige Informationen in einem Randbereich eines Displays visualisiert werden, während maschinenübergreifende zuvor alleine auf dem Monitor visualisierte Informationen in der Weise gezoomt werden, dass sie weiterhin ablesbar sind, die neuen Information aber in einem gut zugänglichen und damit leichter editierbaren äußeren Bereich des Displays positioniert sind. Obgleich eine so strukturierte Visualisierungseinrichtung eine bessere Orientierung auf dem Bildschirm sicherstellt, haben auch derartige Systeme den Nachteil, dass die Vielzahl der visualisierten Informationen mitunter für den laufenden Prozess nicht erforderlich sind und damit zu einer unnötigen Reizüberflutung des die jeweilige landwirtschaftliche Arbeitsmaschine bedienenden Fahrers führen können.

Aus der US 2007/135977 ist zudem eine Visualisierungseinrichtung bekannt geworden, bei der in unterschiedlichen Bildschirmkonfigurationen Teilbereiche des Bildschirms sowohl in vertikaler als auch in horizontaler Richtung scrollbar sind. Auch in diesem Fall ist es für den Bediener der Visualisierungseinrichtung nur schwer möglich, die Orientierung in den verfügbaren Bedienmenüs nicht zu verlieren.

Es ist deshalb Aufgabe der Erfindung, die beschriebenen Nachteile des Standes der Technik zu vermeiden und insbesondere eine Visualisierungseinrichtung vorzuschlagen, die jeweils nur kontextrelevante Parameter visualisiert und die Visualisierung nach wiederkehrendem Muster zur schnellen Orientierung des Bedieners erfolgt.

Diese Aufgabe wird erfindungsgemäß durch die kennzeichnenden Merkmale des Anspruchs 1 gelöst.

Indem eine elektronische Bedien- und Anzeigeeinheit zumindest ein Display mit einer Vielzahl von Visualisierungsbereichen umfasst und in Navigationsebenen betreibbar ist, wobei das Display innerhalb einer Navigationsebene in Visualisierungsbereiche unterteilt ist und zumindest ein Teil der Visualisierungsbereiche relativ zueinander bewegbar sind wird sichergestellt, dass jeweils nur kontextrelevante Parameter visualisiert werden und die Visualisierung nach wiederkehrendem Muster zur schnellen Orientierung des Bedieners in den Navigationsebenen führt.

In einer vorteilhaften Ausgestaltung der Erfindung umfasst die Bewegbarkeit der Visualisierungsbereiche relativ zueinander ein horizontales und/oder vertikales Scrollen des jeweiligen Visualisierungsbereiches, sodass der Bediener hier mit einer effizienten, weit verbreiteten Navigationsstruktur konfrontiert ist, die einfach beherrschbar ist und schnell zu dem auf dem Display auszuwählenden Parameter führt.

Indem das Display in einer ersten Navigationsebene zumindest einen Visualisierungsbereich "Arbeitsphase" und einen Visualisierungsbereich "Tool-Menü" umfasst, wobei der Visualisierungsbereich "Arbeitsphase" horizontal scrollbar und der Visualisierungsbereich "Tool-Menü" vertikal scrollbar ist kann der Bediener auf einen Blick erfassen, welches die verfügbaren Werkzeuge und welches die verfügbaren Arbeitsumgebungen sind, auf die sich die verfügbaren Werkzeuge beziehen.

Damit der Bediener einen schnellen Blick über die verfügbaren und in einer ersten Menüebene anwählbaren Arbeitsphasen erhält ist in einer weiteren vorteilhaften Ausgestaltung der Erfindung vorgesehen, dass während des Scrollens des Visualisierungsbereichs "Arbeitsphase" ein Anzeigefeld sichtbar wird welches alle wählbaren Arbeitsphasen anzeigt, wobei die jeweils aktivierte Arbeitsphase hervorgehoben visualisiert wird.

Damit die erfindungsgemäße Bedien- und Anzeigeneinheit universell auf verschiedensten landwirtschaftlichen Arbeitsmaschinen und in den unterschiedlichsten Arbeitsstadien einsetztbar ist, ist in einer vorteilhaften Weiterbildung der Erfindung vorgesehen, dass der Visualisierungsbereich "Arbeitsphase" die Arbeitsphasen "Vorbereitung", "Straßenfahrt", "Feldfahrt" und "Vorgewende" umfasst, wobei der Visualisierungsbereich jeder Arbeitsphase einen Anzeigebereich "Arbeitsphasen-Content" und zumindest einen Anzeigebereich "Tool-View" umfasst.

Damit stets nur die für den momentanen Einsatz relevanten Information auf dem Display visualisiert werden ist zudem vorgesehen, dass zumindest die Inhalte der Visualisierungsbereiche "Arbeitsphasen Content" und "Tool-View" in der Weise aneinander gekoppelt sind, dass die Wahl eines konkreten Inhalts im Visualisierungsbereich "Arbeitsphasen Content" zur automatischen Anpassung der Inhalte des Visualisierungsbereichs "Tool-View" und umgekehrt die Wahl eines konkreten Inhalts im Visualisierungsbereich "Tool-View" zu einer selbsttätigen Anpassung der Inhalte des Visualisierungsbereichs "Arbeitsphasen-Content" führt.

Damit der Bediener permanent und unterbewusst wahrnimmt in welcher Navigationsebene gerade navigiert wird, ist die Displaystruktur so beschaffen, dass eine zweite Navigationsebene zumindest einen Visualisierungsbereich "Tool Content", einen Visualisierungsbereich "Tool-Menü" sowie einen Visualisierungsbereich "Tool-Submenü" umfasst und alle Visualisierungsbereiche vertikal scrollbar sind. Aufgrund dessen, dass in dieser Navigationsebene ausschließlich ein vertikales Scrollen möglich ist, erkennt der Nutzer unmittelbar an der Art der Bedienung in welcher Menüebene gerade navigiert wird.

Eine effiziente Bedienung der Bedien- und Anzeigeneinheit wird dann gewährleistet, wenn das Display als Touchscreen-Monitor ausgebildet ist und die Bewegbarkeit der Visualisierungsbereiche in der jeweiligen Navigationsebene durch Berührung des Touchscreen-Monitors erfolgt. Eine noch höhere Bedienflexibilität wird in diesem Zusammenhang dann erreicht, wenn dem Display zudem Bedienelemente zugeordnet sind, sodass das Navigieren im Display auch durch das Betätigen von Tastern oder einer Kombination aus beiden möglich wird.

Damit der Bediener auch ohne Navigieren im Display schnell zu gewünschten wichtigen Informationen oder Parametereinstellungen gelangt ist in einer vorteilhaften Ausgestaltung der Erfindung vorgesehen, dass dem Display ein in allen Navigationsebenen visualisierter Anzeigenbereich zugeordnet ist, der zumindest einen Anzeigebereich "Favoriten" und einen Anzeigebereich "Hotkey" umfasst, wobei im Anzeigebereich "Favoriten" dauerhaft systemrelevante Informationen visualisiert werden und im Anzeigenbereich "Hotkey" navigationsebenenrelevante Informationen durch Aktivierung dieses Anzeigenbereichs visualisierbar sind. Da häufig die Änderbarkeit einer Vielzahl wichtiger Maschinenparameter notwendig ist, wird bei Aktivierung des Anzeigebereichs "Hotkey" ein den Visualisierungsbereich "Arbeitsphase" zumindest teilweise überlappendes Pop-up Window "Content" geöffnet, wobei die Inhalte des Pop-up Windows "Content" durch vertikales Scrollen oder Betätigung von Bedienelementen visualisierbar und sodann editierbar sind.

Um schnell von einer Arbeitsphase in eine andere zu gelangen, ist weiter vorgesehen, dass dem Display eine in allen Navigationsebenen visualisierter Header-Menüleiste zugeordnet ist bei deren Aktivierung unmittelbar der Visualisierungsbereich "Arbeitsphasen" aktiviert wird.

Damit auch innerhalb einer Navigationsebene sichergestellt ist, dass nur die jeweils relevanten Parameter visualisiert sind, sind in einer vorteilhaften Weiterbildung der Erfindung die Visualisierungsbereiche jeder Navigationsebene des Displays in der Weise miteinander gekoppelt, dass ein Editieren eines Visualisierungsbereichs ein selbstständiges Anpassen der Inhalte des oder der korrespondierenden Visualisierungsbereiche bewirkt.

Ein schnelles Rückgängigmachen oder Beenden eines gewählten Werkzeugs kann in einer zweckmäßigen Ausgestaltung dadurch erreicht werden, dass ein Berühren eines aktivierten Visualisierungsbereichs außerhalb eines den Visualisierungsbereich beschreibenden Ikons zum Schließen eines aktivierten Menüfensters führt und/oder ein Rücksetzen von durchgeführten Änderungen bewirkt.

Damit der Bediener die Displaystruktur optimal an seine Bedürfnisse anpassen kann ist in einer weiteren vorteilhaften Ausgestaltung der Erfindung vorgesehen, dass die Konfiguration des Displays in zumindest einer der verfügbaren Navigationsebenen editierbar ist. Im einfachsten Fall kann diese freie Konfigurierbarkeit sichergestellt werden, indem in der ersten Navigationsebene die Visualisierungsbereiche "Arbeitsphasen-Content" und "Tool-View" eine Vielzahl konfigurierbarer Teilbereiche umfassen und wobei jeder der Teilbereiche in der Weise editierbar ist, das der Inhalt eines im Visualisierungsbereich "Tool-Menü" hinterlegten Werkzeugs in den jeweiligen Teilbereich ziehbar ist

Eine gute Übersichtlichkeit bei der Abarbeitung von Einstelloptionen wird am Display dann erreicht, wenn in einer vorteilhaften Weiterbildung der Erfindung das gewählte Werkzeug eine Vielzahl von Editieroptionen umfasst, die durch Öffnung eines das Display zumindest teilweise überlappenden Pop-up Windows "Content" aus diesem auswählbar sind. Damit auch beim Navigieren in einem geöffneten Pop-up Window "Content" der Bediener informiert bleibt in welcher Navigationsebene navigiert wird, ist vorgesehen, dass das Öffnen und Schließen des Pop-up Windows "Content" durch horizontales Bewegen des Pop-up Windows "Content" in das Display und aus diesem heraus bewirkt wird, während das Navigieren zwischen wählbaren Editieroptionen durch vertikales Scrollen erfolgt.

Ein schneller Wechsel von einer Navigationsebene in die andere wird im einfachsten Fall dadurch sichergestellt, dass nach Aktivierung einer Arbeitsphase im Visualisierungsbereich "Arbeitsphase" eine Vielzahl die Arbeitsphase beschreibende Ikons angezeigt werden und ein Navigieren innerhalb dieser Arbeitsphase und/oder ein Wechsel von der ersten Navigationsebene in die zweite Navigationsebene zumindest durch Aktivierung eines Ikons bewirkt wird. Damit auch nach Aktivierung eines Ikons die Information in welcher Menüebene gerade navigiert wird vorhanden ist, ist in einer weiteren vorteilhaften Ausgestaltung der Erfindung vorgesehen, dass bei Aktivierung eines Ikons ein das Display zumindest teilweise überlappendes Pop-up Window "Content" öffnet und die Inhalte dieses Pop-up Windows "Content" zumindest durch vertikales Scrollen visualisierbar und sodann editierbar sind.

Damit für den Bediener der Bedien- und Anzeigeeinheit die am Display vorzunehmenden Handlungen auch in diesem Zusammenhang widererkennbar bleiben ist zudem vorgesehen, dass das zumindest teilweise überlappende Pop-up Window "Content" durch horizontales Einschieben in den Visualisierungsbereich des Displays visualisiert wird.

In Abhängigkeit von der Komplexität eines gewählten Werkzeugs kann ein Editieren von Parametern in mehreren Stufen zweckmäßig sein, wobei hier neben generellen Einstellungen auch ganz spezielle Parametereinstellungen eine Rolle spielen können, sodass in einer weiteren vorteilhaften Ausgestaltung der Erfindung vorgesehen ist, dass das eingeschobene Pop-up Window "Content" ein oder mehrere Ikons umfasst und durch Aktivierung eines der Ikons zumindest ein weiteres Pop-up Window "Content" über dem bereits visualisierte Pop-up Window "Content" positioniert wird, wobei die Inhalte dieses zuletzt geöffneten Pop-up Windows "Content" zumindest durch vertikales Scrollen visualisierbar und sodann editierbar sind.

Damit auch beim Öffnen von untergeordneten Pop-up Windows "Content" sichergestellt ist, dass stets nur die für den jeweiligen Einstellvorgang benötigten Informationen am Display visualisiert sind, wird in einer vorteilhaften Weiterbildung der Erfindung vorgesehen, dass eine Vielzahl weiterer Pop-up Windows "Content" aktivierbar sind, wobei jedes der nachfolgend aktivierten Pop-up Windows "Content" über dem zuvor aktivierten Pop-up Window "Content" durch horizontales Einschieben in den Visualisierungsbereich des Displays positioniert wird.

Eine besonders zweckdienliche, vom Bediener gut betätigbare und verständliche Parametereinstellung wird dann sichergestellt, wenn das aktivierte Ikon einen Parameter einer Arbeitsmaschine repräsentiert und durch Aktivierung des Ikons zumindest ein virtueller Drehschalter am Display angezeigt wird, wobei der virtuelle Drehschalter zur Änderung des Parameters der Arbeitsmaschine editierbar ist. In diesem Zusammenhang wird der Bedienkomfort noch dadurch erhöht, dass die Editierbarkeit des virtuellen Drehschalters durch lineares oder kreisförmiges Ziehen eines Markers bewirkt wird und die Aktivierung des Markes mittels der Touchscreen-Funktion oder durch dem Display zugeordnete Bedienelemente, vorzugsweise Dreh-Druck-Schalter erfolgt.

Die erfindungsgemäße Bedien- und Anzeigeeinheit kann dann hochflexibel und effizient zur Optimierung von Einsatzbedingungen einer landwirtschaftlichen Arbeitsmaschine eingesetzt werden, wenn die mittels der Bedien- und Anzeigeeinheit editierbaren Parameter Maschinenparameter, Qualitätsparameter der landwirtschaftlichen Arbeitsmaschine, Qualitätsparameter des Erntegutes und Erntegutparameter sind.

Indem der Visualisierungsbereich "Tool-Menü" alle auf der landwirtschaftlichen Arbeitsmaschine verfügbaren Werkzeuge umfasst, ist zudem sichergestellt, dass die landwirtschaftliche Arbeitsmaschine mit einer einzigen Bedien- und Anzeigeeinrichtung bedienbar wird.

Eine besonders vorteilhafte Ausgestaltung der Erfindung ergibt sich dann, wenn die Bedien- und Anzeigeeinheit ein Werkzeug "Bedien- und Einstellungsanleitung" umfasst. Auf diese Weise wird sichergestellt, dass der Bediener ein effizientes Mittel an die Hand bekommt, um auf der Maschine anfallende Tätigkeiten zügig selbst durchführen zu können.

Um einerseits die Erkennbarkeit bestimmter Informationen am Display zu erhöhen und andererseits keine der notwendigen Informationen aus dem Anzeigebereich entfernen zu müssen ist in einer weiteren vorteilhaften Ausgestaltung der Erfindung vorgesehen, dass das Display als Touchscreen-Monitor ausgeführt ist und der Touchscreen-Monitor bereichsweise zoombar ist.

Da landwirtschaftlichen Arbeitsmaschinen häufig in ihren rechts- und linksseitigen Bereichen unterschiedliche Einstellfunktionen zugeordnet sind kann es von Interesse sein, dass der Bediener der landwirtschaftlichen Arbeitsmaschine im Bedarfsfall auch die spiegelbildliche Darstellung der Maschine benötigt. Damit eine demgemäße Anpassung der Displaystruktur auf einfache Art und Weise möglich wird ist in einer vorteilhaften Weiterbildung der Erfindung vorgesehen, dass das Display als Touchscreen-Monitor ausgeführt ist und eine Vielzahl von visualisierten Ikons umfasst und eine zweifingrige eine Rotationsbewegung beschreibende Berührung des Touchscreen-Monitors zu einer spiegelbildlichen Darstellung des jeweiligen Ikons führt, wobei die ursprüngliche Darstellung des Ikons erhalten bleibt.

Um zügig innerhalb geöffneter Auswahlfenster navigieren zu können ist zudem vorgesehen, dass das Display als Touchscreen-Monitor ausgeführt ist und ein zweifingeriges horizontales oder vertikales Scrollen des jeweiligen Visualisierungsbereichs eine Erhöhung der Scroll-Geschwindigkeit bewirkt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Mähdrescher ausgeführte landwirtschaftliche Arbeitsmaschine, die erfindungsgemäße Bedien- und Anzeigeeinheit umfassend
- Figur 2: eine schematische Darstellung der erfindungsgemäßen Bedien- und Anzeigeeinheit in verschiedenen Navigationsebenen
- Figur 3: das Navigieren in einer ersten Navigationsebene
- Figur 4: das Ändern der Displaystruktur in einer Navigationsebene
- Figur 5: das Ändern von Parametern in einer Navigationsebene
- Figur 6: das Navigieren in einer weiteren Navigationsebene
- Figur 7: das Aktivieren einer Hotkey-Funktion und das Navigieren in dieser
- Figur 8: eine schematische Darstellung von Funktionen zur Aktivierung eines Touchscreen-Monitors
- Figur 9: das Navigieren in einem Werkzeug "Bedien- und Einstellanleitung"

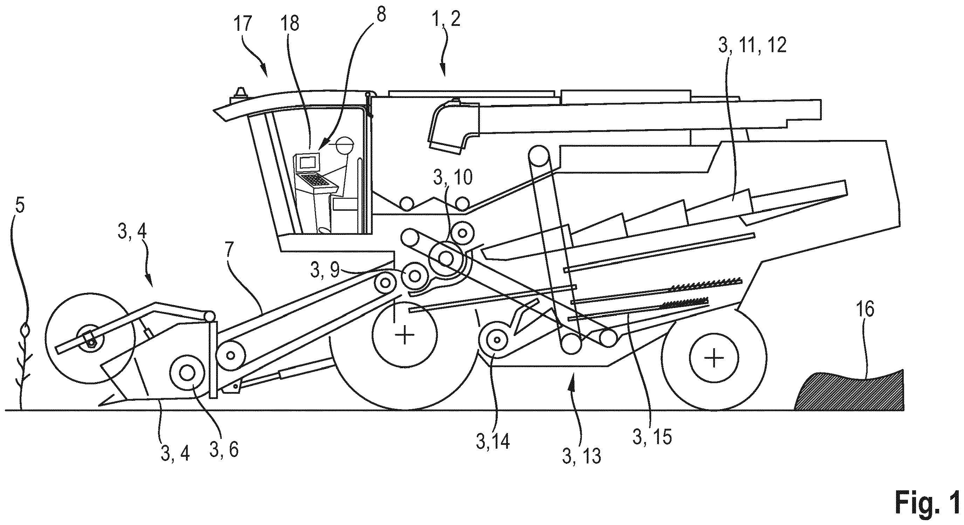

Figur 1 zeigt eine beispielhaft als Mähdrescher 2 ausgeführte landwirtschaftliche Arbeitsmaschine 1 und deren Arbeitsaggregate 3. In seinem frontseitigen Bereich nimmt der Mähdrescher 2 ein Schneidwerk 4 auf, welches das Erntegut 5 annimmt, schneidet und mittels eines Förderorgans 6 an den nachgeordneten Schrägförderer 7 übergibt. Über den Schrägförderer 7 wird das Erntegut 5 in an sich bekannter Weise an die Dreschorgane, die vorliegend aus einer ersten Dreschtrommel 9 und einer dieser nachgeordneten zweiten Dreschtrommel 10 bestehen, übergeben.
Zur weiteren Abscheidung der Körner wird der Gutstrom an eine Trenneinrichtung 11, wie beispielsweise einen Hordenschüttler 12, sowie an eine Reinigungseinrichtung 13, die im wesentlichen aus einem Gebläse 14 und Reinigungssieben 15 besteht, gefördert, bevor das Stroh aus dem rückwärtigen Bereich des Mähdreschers 2 heraus gefördert und beispielsweise auf dem Feldboden in einem Schwad 16 abgelegt oder breitverteilt wird. Über eine in der Kabine 17 angeordnete im folgenden näher zu beschreibende erfindungsgemäße elektronische Bedien- und Anzeigeeinheit 8 kann der Fahrer des Mähdreschers 2 in an sich bekannter Weise Einstellungen der unterschiedlichen Arbeitsaggregate 3 vornehmen und auf diese Weise die Erntefahrt den spezifischen Erntegutbedingungen anpassen. Darüber hinaus hat der Fahrer des Mähdreschers 2 stets einen Überblick über die auf dem Display 18 der in der Kabine 17 angeordneten Bedien- und Anzeigeeinheit 8 visualisierten Maschinen- und/oder Erntegutdaten. In Bezug auf die hier dargestellte, als Mähdrescher 2 ausgeführte landwirtschaftliche Arbeitsmaschine 1 liegt es im Rahmen der Erfindung, dass die landwirtschaftliche Arbeitsmaschine 1 auch als beliebige landwirtschaftliche Arbeitsmaschine, etwa als Feldhäcksler oder Traktor ausgeführt sein kann.

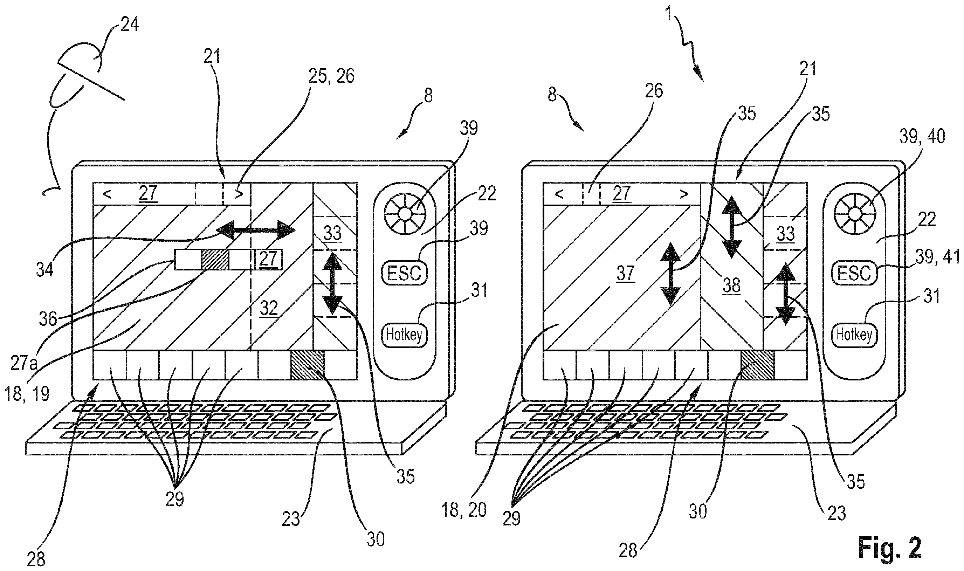

Figur 2 zeigt eine schematische Darstellung der erfindungsgemäßen Bedien- und Anzeigeeinheit 8, wobei die linke Darstellung die noch näher zu beschreibende erste Navigationsebene 19 und die rechte Darstellung die ebenfalls noch näher zu beschreibende zweite Navigationsebene 20 des der Bedien- und Anzeigeeinheit 8 zugeordneten Displays 18 darstellt. Die Bedien- und Anzeigeeinheit 8 umfasst neben dem als Touchscreen-Monitor 21 ausgeführten Display 18 eine erste Bedieneinheit 22, die ein Navigieren innerhalb einer Menüebene 19, 20 ermöglicht sowie zumindest eine weitere Bedieneinheit 23 mittels derer Eingaben durch den Bediener 24 vorgenommen werden können. Es liegt im Rahmen der Erfindung, dass die ersten und zweiten Bedieneinheiten 22, 23 in nicht dargestellter Weise in einer einzigen Bedieneinheit zusammengefasst sein können. Das als Touchscreen-Monitor 21 ausgeführte Display 18 verfügt in seinem obenseitigen Bereich über einen als sogenannte Header-Menüleiste 25 ausgeführten Anzeigebereich 26, der permanent zumindest in der ersten Navigationsebenen 19 sichtbar ist. Die Header-Menüleiste 25 umfasst die noch näher zu beschreibenden Arbeitsphasen 27 der landwirtschaftlichen Arbeitsmaschine 1, wobei jede der Arbeitsphasen 27 durch horizontales Scrollen der Header-Menüleiste 25 vom Betreiber 24 der landwirtschaftlichen Arbeitsmaschine 1 via Touchscreen-Funktion durch horizontales Ziehen der Header-Menüleiste 25 auswählbar ist.

Am untenseitigen Rand des Displays 18 ist diesem ein weiterer, in allen verfügbaren Navigationsebenen 19, 20 sichtbarer Anzeigebereich 28 zugeordnet, der einen Anzeigebereich "Favoriten" 29 sowie einen Anzeigebereich "Hotkey" 30 umfasst, wobei in noch näher zu beschreibender Weise im Anzeigebereich "Favoriten" 29 dauerhaft systemrelevante Informationen visualisiert werden und im Anzeigenbereich "Hotkey" 30 navigationsebenenrelevante Informationen durch Aktivierung des jeweiligen Anzeigenbereichs 29 visualisierbar sind. Die in dem Button "Hotkey" 30 hinterlegten navigationsebenenrelevanten Informationen können entweder durch Berühren dieses Buttons auf dem als Touchscreen-Monitor 21 ausgeführten Display 18 oder durch Drücken der in der ersten Bedieneinheit 22 angeordneten Taste "Hotkey" 31 aktiviert werden.

Das erfindungsgemäß in Navigationsebenen 19, 20 betreibbare Display 18 umfasst in einer ersten Navigationsebene 19 zumindest einen Visualisierungsbereich "Arbeitsphase" 32 sowie einen Visualisierungsbereich "Tool-Menü" 33, wobei der Bediener 24 der landwirtschaftlichen Arbeitsmaschine 1 durch horizontales Scrollen 34 im Visualisierungsbereich "Arbeitsphase" 32 und vertikales Scrollen 35 im Visualisierungsbereich "Tool-Menü" 33 in dem jeweiligen Visualisierungsbereich 32, 33 navigieren kann. Da das Display 18 als Touchscreen-Monitor 21 ausgeführt ist wird das horizontale und vertikale Scrollen 34, 35 durch Berührung des Display 18 und das Ziehen des jeweiligen Visualisierungsbereichs 32, 33 in der gewünschten Richtung bewirkt. Damit der Bediener 24 während des Scrollens im Visualisierungsbereich "Arbeitsphase" 32 über die jeweils gerade aktivierte Arbeitsphase 32 informiert ist, wird ein weiteres Anzeigefeld 36 am Display 18 eingeblendet, welches alle wählbaren Arbeitsphasen 27 anzeigt, wobei die jeweils aktivierte Arbeitsphase 27a hervorgehoben visualisiert wird.

In der erfindungsgemäßen weiteren Navigationsebene 20 umfasst das Display 18 zumindest einen Visualisierungsbereich "Tool Content" 37, den Visualisierungsbereich "Tool-Menü" 33 sowie einen Visualisierungsbereich "Tool-Submenü" 38, wobei in jedem dieser Visualisierungsbereiche 33, 37, 38 durch vertikales Scrollen 35 navigiert werden kann. In analoger Weise zur ersten Navigationsebene 19 wird das vertikale Scrollen 35 durch Berührung des Displays 18 und das Ziehen des jeweiligen Visualisierungsbereichs 33, 37, 38 in die gewünschte Richtung bewirkt. Darüber hinaus ist in der zweiten Navigationsebene 20 das Navigieren zwischen den Visualisierungsbereichen 33, 37,38 und innerhalb jedes Visualisierungsbereichs 33, 37, 38 mittels der ersten Bedieneinheit 22 zugeordneten Bedienelementen 39 möglich. Im dargestellten Ausführungsbeispiel verfügt die erste Bedieneinheit 22 über ein als Dreh-Druck-Schalter 40 ausgeführtes Bedienelement 39 bei dessen Drehung zwischen den Visualisierungsbereichen 33, 37, 38 hin und her geschaltet und innerhalb eines Visualisierungsbereiches 33, 37,38 navigiert werden kann, wobei die Drücken-Funktion des Dreh-Druck-Schalters 40 jeweils zur Bestätigung oder Auswahl einer gewählten Funktion dient. Mittels des als Escape-Taste 41 ausgeführten weiteren Bedienelementes 39 kann eine mit dem Dreh-Druck-Schalter 40 vorgenommene Editierung zurückgesetzt werden.

Indem das Display 18 in den beschriebenen ersten und zweiten Navigationsebenen 19, 20 betreibbar ist, wobei das Display 18 innerhalb einer Navigationsebene 19, 20 in Visualisierungsbereiche 32, 33, 37, 38 unterteilt ist und zumindest ein Teil der Visualisierungsbereiche 32, 33, 37, 38 relativ zueinander bewegbar sind, wird eine Navigationsmöglichkeit geschaffen, die dem Bediener 24 der landwirtschaftlichen Arbeitsmaschine 1 ein schnelles und zudem übersichtliches Ändern von Maschinenparametern ermöglicht. Die Orientierung innerhalb der verfügbaren Navigationsebenen 19, 20 wird auch dadurch noch erhöht, dass nur in einer ersten Navigationsebene 19 ein horizontales Scrollen 34 möglich ist während in der zumindest einen weiteren Navigationsebene 20 ausschließlich ein vertikales Scrollen 35 realisierbar ist. Dies hat vor allem den Effekt, dass der Bediener 24 der landwirtschaftlichen Arbeitsmaschine bereits an der Bewegung der Visualisierungsbereiche 32, 33, 37, 38 erkennt, in welcher Navigationsebene 19, 20 gerade navigiert wird.

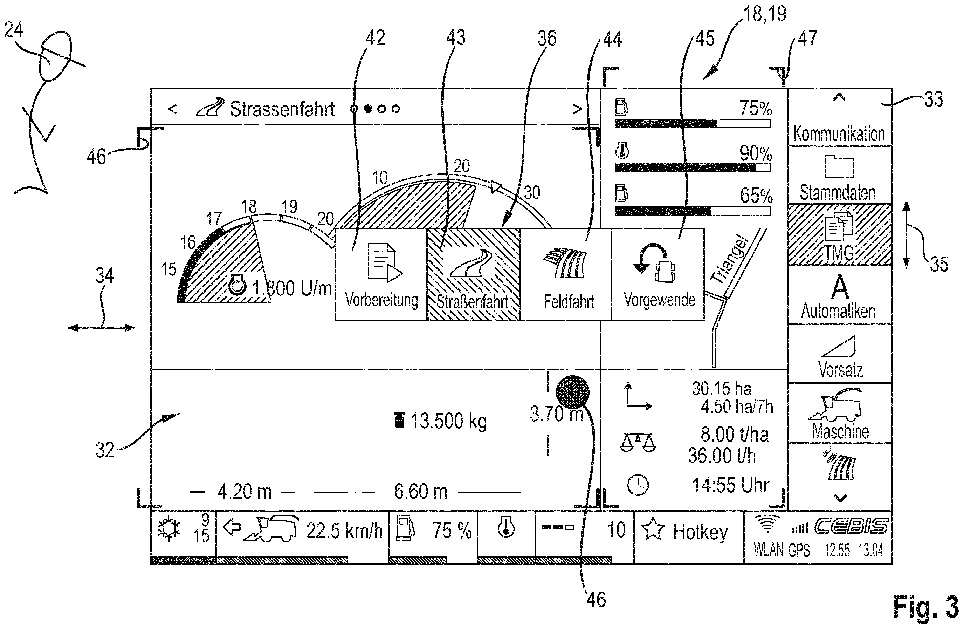

Figur 3 zeigt eine Detailansicht des Displays 18 in der ersten Navigationsebene 19. Das die verfügbaren Arbeitsphasen visualisierende Anzeigefeld 36 umfasst die Arbeitsphasen "Vorbereitung" 42, "Straßenfahrt" 43, "Feldfahrt" 44 und "Vorgewende" 45. Der Visualisierungsbereich jeder Arbeitsphase 42-45 ist so strukturiert, dass er einen Visualisierungsbereich "Arbeitsphasen-Content" 46 und zumindest einen Visualisierungsbereich "Tool-View" 47 umfasst. In der ersten Navigationsebene 19 kann der Bediener 24 durch Berührung 48 des Displays 18 mit dem Finger oder einem geeigneten Gegenstand die gewünschte Arbeitsphase 42-45 wählen indem er entweder den Visualisierungsbereich "Arbeitsphase" 32 in horizontaler Richtung 34 scrollt oder die gewünschten Arbeitsphasen 42-45 unmittelbar in dem zusätzlichen Anzeigefeld 36 antippt. Unabhängig davon, kann der Bediener 24 in der ersten Navigationsebene 19 in dem Visualisierungsbereich "Tool-Menü" 33 in noch näher zu beschreibender Weise durch vertikales Scrollen 35 in diesem Navigieren.

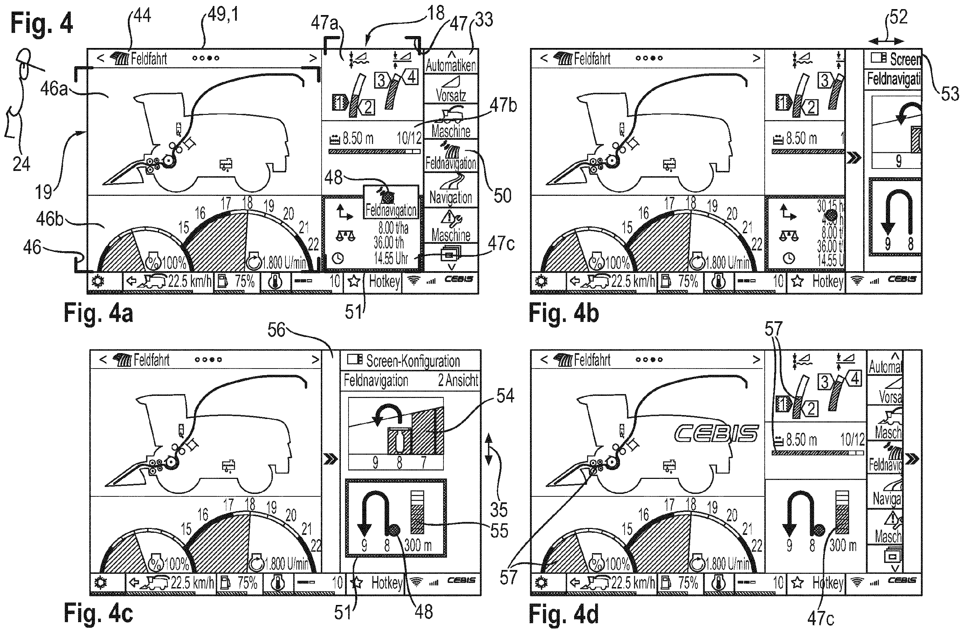

Figur 4 zeigt am Beispiel einer als selbstfahrender Feldhäcksler 49 ausgeführten landwirtschaftlichen Arbeitsmaschine 1 das Ändern der Struktur des Displays 18 in der ersten Navigationsebene 19. Obgleich die Änderung der Displaystruktur nachfolgend anhand der ersten Navigationsebene 19 beschrieben wird liegt es im Rahmen der Erfindung, dass die zu beschreibende Prozedur in analoger Weise auch zur Änderung der Displaystruktur in der zweiten Navigationsebene 20 anwendbar ist, sodass aus Vereinfachungsgründen auf eine Beschreibung dieser Prozedur verzichtet wird. Im dargestellten Ausführungsbeispiel wurde vom Bediener 24 des Feldhäckslers 49 die Arbeitsphase "Feldfahrt" 44 ausgewählt. Jeder der Visualisierungsbereiche "Arbeitsphasen-Content" 46 und "Tool-View" 47 sind in Teilbereiche 46a-b, 47 a-c untergliedert, wobei die in den Teilbereichen 46a-b, 47a-c visualisierten Informationen teilbereichsweise austauschbar sind. Die Editierung erfolgt in der Weise, dass der Bediener 24 zunächst durch Berührung 48 aus dem Visualisierungsbereich "Tool-Menü" 33 ein Werkzeug 50, hier das Werkzeug "Feldnavigation", auswählt und in einen der Teilbereiche 46a-b, 47a-c der Visualisierungsbereiche "Arbeitsphasen-Content" 46 oder "Tool-View" 47 zieht.

Im dargestellt Ausführungsbeispiel wird das Werkzeug "Feldnavigation" 50 in den untersten Teilbereich 47c des Visualisierungsbereichs "Tool-View" 47 gezogen, wobei die Aktivierung des Teilbereichs 47c durch einen farblich hervorgehobenen Rand 51 signalisiert wird. Unterbricht der Bediener 24 in diesem Teilbereich 47c die Berührung öffnet sich ein von rechts nach links in horizontaler Richtung 52 in das Display eingeschobenes Pop-up Window "Content" 53, welches im vorliegenden Fall zwei alternative Editieroptionen 54, 55 für das Werkzeug "Feldnavigation" 50 umfasst. Indem der Bediener 24 durch Berührung 48 eine der alternativen Editieroptionen 54, 55 aus dem den Visualisierungsbereich "Tool-View" 47 vollständig überdeckenden Pop-up Window "Content" 53 wählt, wird diese Editieroption 55 zunächst zum Zeichen ihrer Auswahl optisch hervorgehoben, im einfachsten Fall wieder durch farbliche Hervorhebung des Randes 51. Aktiviert der Bediener 24 sodann eine im Pop-up Window "Content" 53 positionierte Schließen-Leiste 56 wird das Pop-up Window "Content" 53 durch horizontales Herausbewegen 52 aus dem Display 18 wieder geschlossen und zugleich hat die gewählte Editieroption 55 den zuvor ausgewählten untersten Teilbereich 47c des Visualisierungsbereichs "Tool-View" 47 ausgefüllt. Es liegt im Rahmen der Erfindung, dass sich die wählbaren Editieroptionen 54, 55 nicht auf visuelle Aspekte beschränken sondern auch verschiedene Funktionen umfassen können. Zugleich können mehr als die 2 beschriebenen Editieroptionen 54, 55 verfügbar sein, wobei dann ein Navigieren zwischen den wählbaren Editieroptionen 54, 55 durch vertikales Scrollen 35 in dem geöffneten Pop-up Window "Content" 53 möglich wird.

Ein Wechsel von der ersten Navigationsebene 19 in die weitere Navigationsebene 20 wird nach Auswahl einer gewünschten Arbeitsphase dadurch bewirkt, dass der Bediener 24 einen der Visualisierungsbereiche "Arbeitsphasen-Content" 46 oder "Tool-View" 47 berührt. Findet die Berührung 48 im Bereich eines der auf dem Display 18 visualisierten Ikons 57 statt, öffnet sich wie nachfolgend näher beschrieben unmittelbar die mit dem berührten Ikon 57 verknüpfte Funktion oder Anwendung. Wird ein Bereich zwischen den Ikons 57 berührt, findet nur der Wechsel zwischen den Navigationsebenen 19, 20 statt, ohne dass dies unmittelbar zu einer Änderung der Displaystruktur führt.

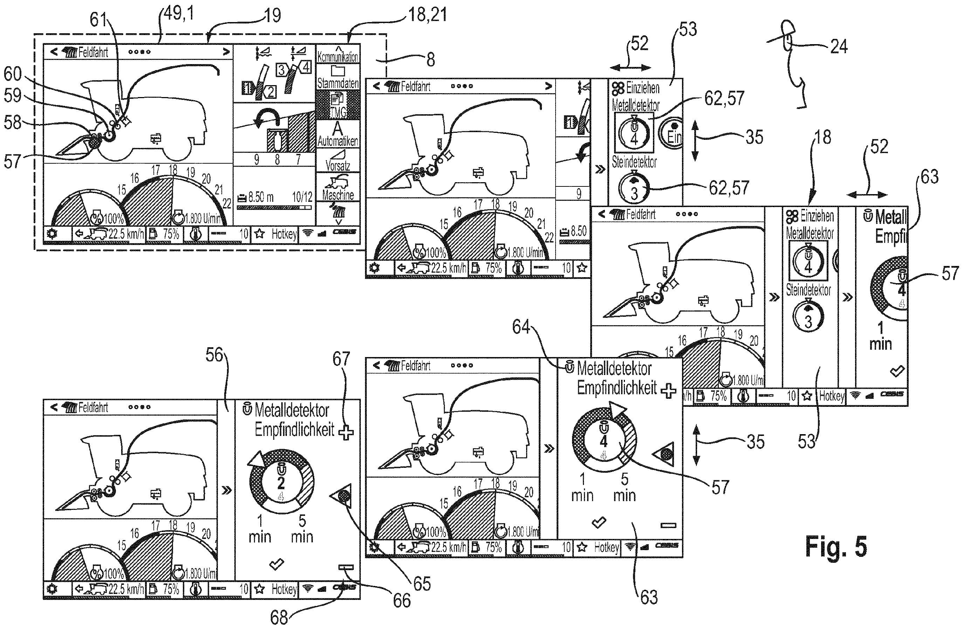

Figur 5 beschreibt beispielhaft eine weitere Variante des Navigierens in der ersten Menüebene 19, wobei hier wieder von einer als Feldhäcksler 49 ausgeführten landwirtschaftlichen Arbeitsmaschine 1 ausgegangen wird. In an sich bekannter Weise verfügt ein Feldhäcksler 49 über Einzugsorgane 58, ein Häckselaggregat 59, einer diesem nachgeordneten Nachzerkleinerungseinrichtung 60 sowie einem Nachbeschleuniger 61 zum Austragen des gehäckselten Gutes aus dem Feldhäcksler 49. Zur Beschreibung dieser Variante des Navigierens in der ersten Menüebene 19 wird hier beispielhaft die Empfindlichkeitseinstellung eines sogenannten Metalldetektors im Bereich der Einzugsorgane 58 des Feldhäckslers 49 herangezogen.

Zunächst berührt der Bediener 24 das als Touchscreen-Monitor 21 ausgeführte Display 18 im Bereich des die Einzugsorgane 58 repräsentierenden Ikons 57. Durch die Berührung wird wieder ein, nunmehr andere Inhalte umfassendes Pop-up Window "Content" 53 in der Weise aktiviert, dass sich das Pop-up Window "Content" 53 wieder in horizontaler Richtung 52 in das Display 18 bewegt, wobei das Pop-up Window "Content" 53 die verfügbare Anzeigefläche des Displays 18 zumindest teilweise überdeckt. In Analogie zu der zuvor beschriebenen Änderung der Displaystruktur sind in dem Pop-up Window "Content" 53 eine Vielzahl von Editieroptionen 61, hier beispielsweise die Editierung eines Metalldetektors und die Editierung eines Steindetektors, verfügbar. Der Bediener 24 wählt nun die gewünschte Editieroption 62, hier Änderung von Parametern des Metalldetektors, durch Berührung des die Editieroption 62 repräsentierenden Ikons 57 aus, wobei das gewählte Ikon 57 wieder durch Farbumschlag seine Aktivierung signalisiert. Sodann öffnet sich selbsttätig ein weiteres Pop-up Window "Content" 63 in der Weise, dass es wiederum in horizontaler Richtung 52 in das Display 18 bewegt wird und in seiner editierfähigen Position schließlich das zuvor geöffnete Pop-up Window "Content" 53 vollständig überdeckt. Im dargestellten Ausführungsbeispiel umfasst das nunmehr geöffnete Pop-up Window "Content" 63 wiederum eine Vielzahl von Ikons 57 mittels derer schließlich Parameter 64 der als Feldhäcksler 49 ausgeführten landwirtschaftlichen Arbeitsmaschine 1, hier die Empfindlichkeit des Metalldetektors, editierbar sind. Es liegt im Rahmen der Erfindung, dass neben den beschriebenen zwei Pop-up Windows "Content" 53, 63 eine Vielzahl von Pop-up Windows "Content" übereinander positionierbar sind, wobei die Zahl der Pop-up Windows "Content" von der abzubildenden Editierfunktion abhängen und in einer bevorzugten Ausgestaltung, zwei nicht übersteigen sollte. Das Schließen des jeweiligen Pop-up Windows "Content" 53, 63 wird wiederum durch Aktivierung einer dem jeweiligen Pop-up Window "Content" 53, 63 zugeordneten Schließen-Leiste 56 oder durch Aktivierung der zuvor beschriebenen Escape-Taste 41 bewirkt.

Der editierbare Parameter 64 kann durch Betätigung eines Markers 65 unmittelbar auf dem als Touchscreen-Monitor 21 ausgeführten Display 18 geändert werden. Im dargestellten Ausführungsbeispiel sind verschiedene Änderungsmodi offenbart. Ein erster Änderungsmodi umfasst die Änderung mittels eines virtuellen Schiebeschalters 66 bei dem ein Marker 65 in vertikaler Richtung linear verschoben wird. Die Positionsänderung des Markers 65 kann aber auch durch unmittelbare Berührung der + und - Symbole 67, 68 auf dem Touchscreen-Monitor 21 bewirkt werden. Zudem ist es möglich, die Änderung des Parameters 64 mittels virtuellem Drehschalter 69 in der Weise vorzunehmen, dass der Marker 65 durch Berührung des Touchscreen-Monitors 21 kreisförmig in seiner Position geändert wird. Vorzugsweise sind alle Änderungsmodi in das Display 18 integriert, sodass eine Änderung des Parameters 64 mittels des linear verschiebbaren Markers 65 des virtuellen Schiebeschalters 66 vorgenommen wird, während der Marker 65 des virtuellen Drehschalters 69 unmittelbar den tatsächlichen Wert des geänderten Parameters 64 anzeigt. Es liegt zudem im Rahmen der Erfindung, dass nur ein Änderungsmodi auf dem Display 18 verfügbar ist, wobei dann der virtuelle Schiebeschalter 66 die Änderung nicht nur qualitativ, etwa + bedeutet höher und - bedeutet niedriger, sondern auch quantitativ angeben muss.

Jedes der Pop-up Windows "Content" 53, 63 kann zudem so beschaffen sein, dass innerhalb des jeweiligen Pop-up Windows "Content" 53, 63 dann mittels vertikalem Scrollen 35 durch die verfügbaren Editieroptionen 62 und Parameter 64 navigiert werden kann, wenn alle verfügbaren Editieroptionen 62 und Parameter 64 nicht sinnvoll in einem einzigen Anzeigebereich darstellbar sind. Verfügt die erfindungsgemäße Bedien- und Anzeigeeinheit 8 nicht über ein als Touchscreen-Monitor 21 ausgeführtes Display 18 liegt es im Rahmen der Erfindung, dass die Bewegung des Markers 65 auch mittels der zu Figur 2 beschriebenen Bedienelemente 39 in der dort offenbarten Weise vorgenommen werden kann.

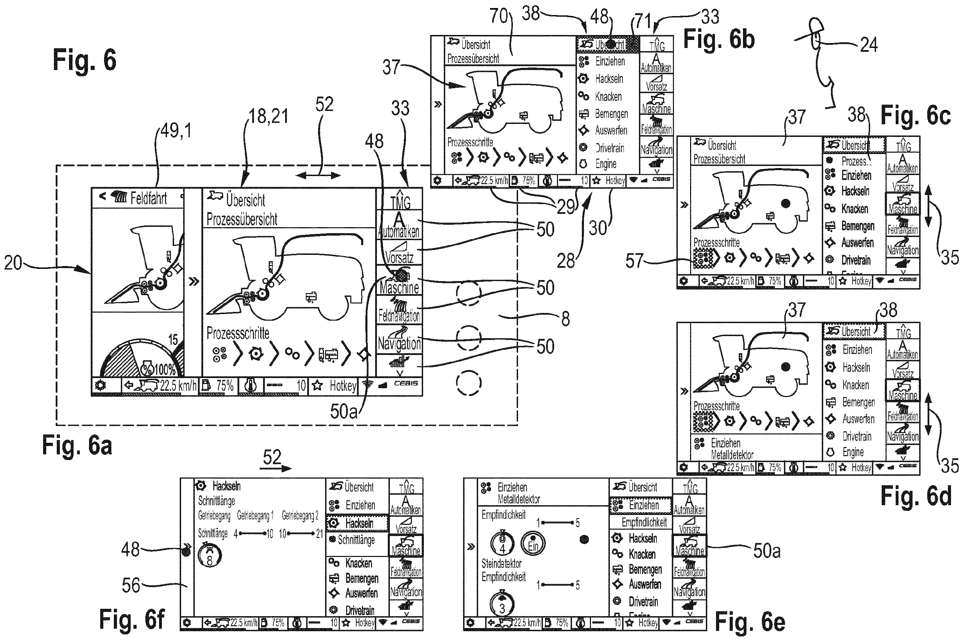

Figur 6 beschreibt schließlich das Navigieren im Display 18 der Bedien- und Anzeigeeinheit 8 in der zweiten Navigationsebene 20. Zunächst wählt der Bediener 24 aus dem alle auf der jeweiligen, hier wieder als Feldhäcksler 49 ausgeführten landwirtschaftlichen Arbeitsmaschine 1 verfügbaren Werkzeuge 50 umfassenden Visualisierungsbereich "Tool-Menü" 33 ein Werkzeug 50 aus. Im vorliegenden Fall wird das Werkzeug "Maschine" 50a durch Berührung 48 des Touchscreen-Monitors 21 aktiviert. Sodann wird das mit dem aktivierten Werkzeug 50a gekoppelte Auswahlfenster 70 in horizontaler Richtung 52 in den Anzeigebereich des Displays 18 bewegt.

Gemäß der Darstellung b.) in Figur 6 füllt das geöffnete Auswahlfenster 70 den Anzeigebereich des Displays 18 außerhalb des Visualisierungsbereichs "Tool-Menü" 33 und außerhalb des die "Favoriten" 29 und den "Hotkey" 30 umfassenden Anzeigebereich 28 vollständig aus. Gemäß der vorhergehenden Beschreibung zur Struktur des Displays 18 in der zweiten Menüebene 20 umfasst das geöffnete Auswahlfenster 67 einen Visualisierungsbereich "Tool-Content" 37 und einen Visualisierungsbereich "Tool-Submenü" 38. Innerhalb jedes dieser Visualisierungsbereiche 37, 38 kann erfindungsgemäß durch vertikales Scrollen 35 in noch näher zu beschreibender Weise navigiert werden. Wird nun durch Berührung 48 aus dem Visualisierungsbereich "Tool-Submenü" 38 ein dort hinterlegtes Werkzeug 71 ausgewählt, wird neben dem gewählten Werkzeug 71 zugleich in dem Visualisierungsbereich "Tool-Content" 37 das hierzu korrespondierende Ikon 57 hervorgehoben, wobei die Hervorhebungen gemäß den Darstellungen b.) und c.) durch farbliche Hinterlegung realisiert werden. Wird nun im Visualisierungsbereich "Tool-Content" 37 durch vertikales Scrollen 35 navigiert, findet gemäß Figur 6d zugleich auch ein vertikales Scrollen 35 im Visualisierungsbereich "Tool-Submenü" 38 statt, sodass die Inhalte beider Visualisierungsbereiche 37, 38 stets aufeinander abgestimmt sind und am Display 18 stets zueinander korrespondierende Informationen visualisiert werden. Wird gemäß Darstellung e.) beispielsweise im Visualisierungsbereich "Tool-Content" 37 wieder der Parameter 64 "Empfindlichkeit des Metalldetektors" ausgewählt, wird auch der Visualisierungsbereich "Tool-Submenü" 38 automatisch durch vertikales Scrollen 35 auf die mit dem Parameter 64 "Empfindlichkeit des Metalldetektors" korrespondierenden Werkzeuge "Metalldetektor/Steindetektor" 50a eingestellt. Damit sind bei dieser Navigationsvariante die Visualisierungsbereiche 37, 38 der zweiten Navigationsebene 20 des Displays 18 in der Weise miteinander gekoppelt, dass ein Editieren eines Visualisierungsbereichs 37, 38 ein selbstständiges Anpassen der Inhalte des korrespondierenden Visualisierungsbereiches 38, 37 bewirkt. Auch bei diesem Navigationsverfahren wird das Auswahlfenster 70 bei Berührung 48 einer Schließen-Leiste 56 durch horizontales Zurückbewegen 52 geschlossen.

Es liegt im Rahmen der Erfindung, dass die mittels der erfindungsgemäßen Bedien-und Anzeigeeinheit 8 steuerbare landwirtschaftliche Arbeitsmaschine 1 nicht auf eine als Mähdrescher 2 oder Feldhäcksler 49 ausgeführte landwirtschaftliche Arbeitsmaschine 1 beschränkt ist sondern beliebig, etwa als Traktor-Anbaugeräte-Kombination, ausgeführt sein kann. Zudem können die mit der Bedien- und Anzeigeeinheit 8 einstellbaren Parameter 64 von beliebiger Art sein und etwa Maschinenparameter, Qualitätsparameter der landwirtschaftlichen Arbeitsmaschine, Qualitätsparameter des Erntegutes und Erntegutparameter umfassen.

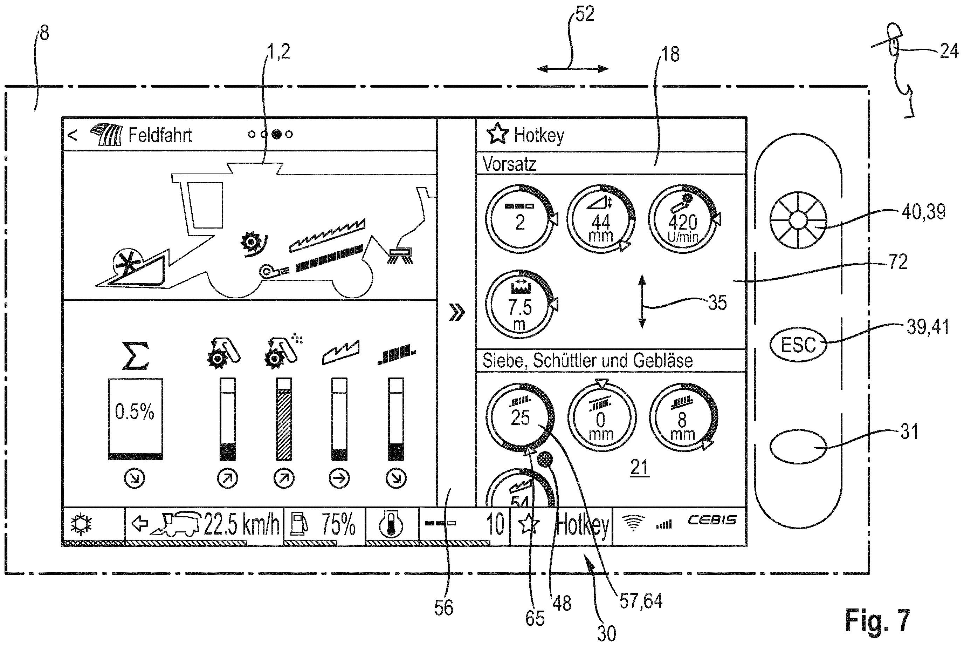

In Figur 7 ist am Beispiel einer als Mähdrescher 2 ausgeführten landwirtschaftlichen Arbeitsmaschine 1 die Funktionsweise des Anzeigebereichs "Hotkey" 30 erläutert. Indem der Bediener 24 der landwirtschaftlichen Arbeitsmaschine 1 durch Berührung 48 den Anzeigebereich "Hotkey" 30 aktiviert, öffnet sich ein diesem Anzeigebereich zugeordnetes Pop-up Window "Content" 72 indem dieses sich von links nach rechts in horizontaler Richtung 52 in den Anzeigebereich des Displays 18 bewegt. Innerhalb des geöffneten Pop-up Windows "Content" 72 kann durch vertikales Scrollen 35 navigiert werden. Das Öffnen und Schließen dieses Pop-up Windows "Content" 72 wird jeweils durch Berührung einer diesem zugeordneten Schließen-Leiste 56 bewirkt. Verfügt die Bedien- und Anzeigeeinheit 8 gemäß Figur 2 über eine Taste "Hotkey" 31 kann das Öffnen und Schließen des Anzeigebereichs "Hotkey" 30 auch durch Betätigung dieser Taste 31 bewirkt werden. Das Navigieren innerhalb des geöffneten Pop-up Windows "Content" 72 erfolgt dann durch Drehen des Dreh-Drück-Schalters 40, wobei ein einen einzustellenden Parameter 64 repräsentierendes Ikon 57 schließlich durch Drücken des Dreh-Drück-Schalters 40 aktiviert wird. Die Änderung des gewählten Parameters 64 erfolgt dann entweder wie bereist beschrieben, durch Ziehen eines Markers 65 auf dem als Touchscreen-Monitor 21 ausgeführten Display 18 oder durch Drehen und Drücken des Dreh-Drück-Schalters 40.

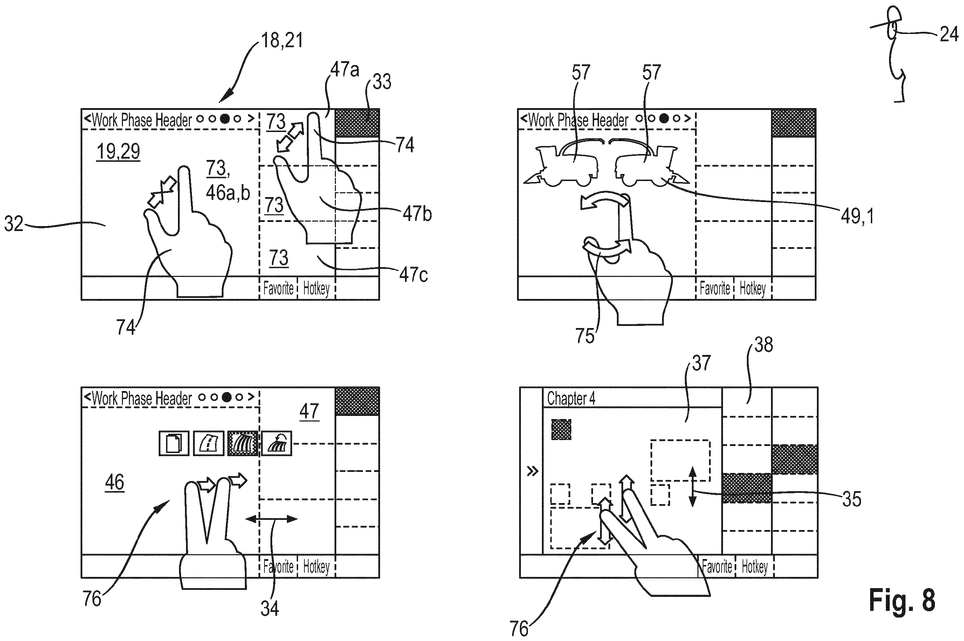

Figur 8 zeigt schließlich verschiedene, noch näher zu erläuternde Betätigungsszenarien für ein als Touchscreen-Monitor 21 ausgeführtes Display 18. Wie bereits beschrieben, ist das Display 18 innerhalb jeder Navigationsebene 19, 20 in verschiedene Visualisierungsbereiche 32, 33, 37, 38, 46, 47 unterteilt. Damit nun die in den verschiedenen Visualisierungsbereichen 32, 33, 37, 38, 46, 47 angezeigten Informationen auf Wesentliches beschränkt oder deutlicher sichtbar werden, ist vorgesehen, dass der Touchscreen-Monitor 21 in Anzeigenbereiche 73 unterteilt ist, die im einfachsten Fall mit den bereits beschriebenen Teilbereichen 46a, b; 47a-c der Visualisierungsbereiche "Arbeitsphasen-Content" 46 und "Tool-View" 47 korrespondieren. Jeder der Anzeigebereiche 73 kann nun unabhängig von den übrigen Anzeigebereichen 71 durch den Bediener 24 mittels Zweifingerbedienung gezoomt werden. Gemäß Figur 8a.) kann durch Aufeinanderzu- oder Voneinanderwegbewegen der Finger 74 der jeweilige Bildausschnitt vergrößert oder verkleinert werden. Zudem ist es gemäß Figur 8b.) möglich, durch eine kreisförmige Bewegung 75 der Finger 72 auf dem Touchscreen-Monitor 21 eine Spiegelung des visualisierten Ikons 57 hervorzurufen, wobei die Darstellung des ursprünglichen Ikons 57 erhalten bleibt. Im dargestellten Ausführungsbeispiel bewirkt diese Spiegelungsfunktion, dass die hier als Feldhäcksler 55 ausgeführte landwirtschaftliche Arbeitsmaschine 1 am Display 18 sowohl rechtsseitig als auch linksseitig abgebildet ist, sodass alle von der jeweiligen Maschinenseite abhängenden Details sichtbar sind. In einer weiteren Ausgestaltung kann der Touchscreen-Monitor 21 auch so beschaffen sein, dass gemäß den Darstellungen c.) und d.) der Figur 8 eine ziehende Berührung 76 des Displays 18 in horizontaler oder vertikaler Richtung zu einer Erhöhung der Geschwindigkeit des vertikalen oder horizontalen Scrollens 34, 35 führen kann.

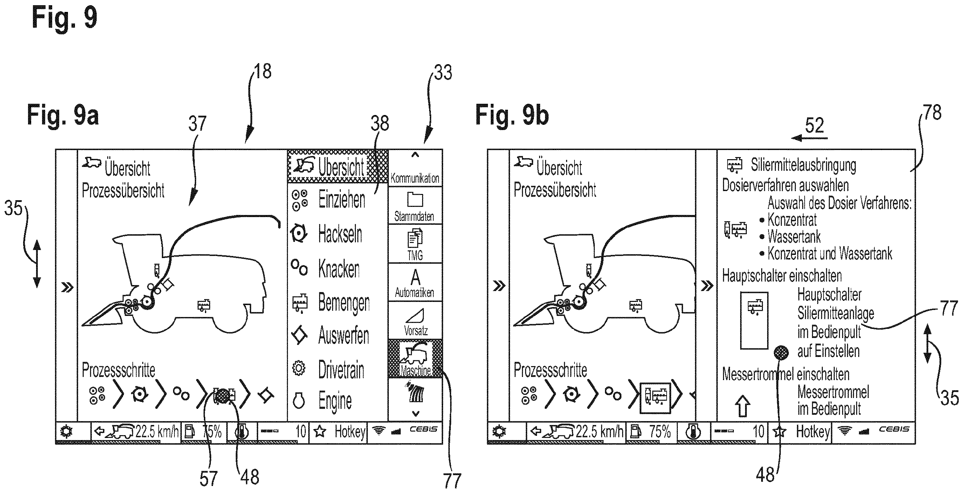

In Analogie zu der in Figur 6 beschriebenen Variante des Navigierens im Display 18 der Bedien- und Anzeigeeinheit 8, kann dieses Navigationsprinzip gemäß Figur 9 auch zur Realisierung einer im Visualisierungsbereich "Tool-Menü" 33 verfügbaren "Bedien- und Einstellanleitung" 77 herangezogen werden. Nach Aktivierung der Werkzeugs "Bedien- und Einstellanleitung" 77 kann in den Visualisierungsbereichen "Tool-Content" 37 und "Tool-Submenü" 38 wie bereits beschrieben durch vertikales Scrollen 35 zu dem eine bestimmte Maschinenfunktion beschreibenden Ikon 57 navigiert werden. Wird das jeweilige Ikon 57 durch Berührung 48 aktiviert, öffnet sich ebenfalls ein Pop-up Window "Content" 78 indem es in horizontaler Richtung 52 in den Anzeigebereich des Displays 18 eingeschoben wird. Innerhalb dieses Pop-up Windows "Content" 78 kann dann durch vertikales Scrollen 35 zu der gewünschten Bedien- und Einstellhilfe 79 navigiert werden.

**Bezugszeichenliste:**

| | | | |
|---|---|---|---|
| 1 | landwirtschaftliche Arbeitsmaschine | 31 | Taste "Hotkey" |
| 2 | Mähdrescher | 32 | Visualisierungsbereich "Arbeitsphasen" |
| 3 | Arbeitsaggregat | 33 | Visualisierungsbereich "Tool-Menü" |
| 4 | Schneidwerk | 34 | horizontales Scrollen |
| 5 | Erntegut | 35 | vertikales Scrollen |
| 6 | Förderorgan | 36 | Anzeigefeld |
| 7 | Schrägförderer | 37 | Visualisierungsbereich "Tool-Content" |
| 8 | Bedien- und Anzeigeeinheit | 38 | Visualisierungsbereich "Tool-Submenü" |
| 9 | erste Dreschtrommel | 39 | Bedienelement |
| 10 | zweite Dreschtrommel | 40 | Dreh-Drück-Schalter |
| 11 | Trenneinrichtung | 41 | Escape-Taste |
| 12 | Hordenschüttler | 42 | Vorbereitung |
| 13 | Reinigungseinrichtung | 43 | Straßenfahrt |
| 14 | Gebläse | 44 | Feldfahrt |
| 15 | Reinigungssieb | 45 | Vorgewende |
| 16 | Schwad | 46 | Visualisierungsbereich "Arbeitsphasen-Content" |
| 17 | Kabine | 46a,b | Teilbereich |
| 18 | Display | 47 | Visualisierungsbereich "Tool-View" |
| 19 | erste Navigationsebene | 48 | Berührung |
| 20 | zweite Navigationsebene | 49 | Feldhäcksler |
| 21 | Touchscreen-Monitor | 50 | Werkzeug |
| 22 | erste Bedieneinheit | 51 | Rand |
| 23 | zweite Bedieneinheit | 52 | horizontale Richtung |
| 24 | Bediener | 53 | Pop-up Window "Content" |
| 25 | Header-Menüleiste | 54, 55 | Editieroption |
| 26 | Anzeigebereich | 56 | Schließen-Leiste |
| 27 | Arbeitsphasen | 57 | Ikon |
| 28 | Anzeigebereich | 58 | Einzugsorgane |
| 29 | Anzeigebereich "Favoriten" | 59 | Häckselaggregat |
| 30 | Anzeigbereich "Hotkey" | 60 | Nachzerkleinerungseinrichtung |
| 61 | Nachbeschleuniger | | |
| 62 | Editieroption | | |
| 63 | Pop-up Window "Content" | | |
| 64 | Parameter | | |
| 65 | Marker | | |
| 66 | virtueller Schiebeschalter | | |
| 67 | Plus-Symbol | | |
| 68 | Minus-Symbol | | |
| 69 | virtueller Drehschalter | | |
| 70 | Auswahlfenster | | |
| 71 | Werkzeug | | |
| 72 | Pop-up Window "Content" | | |
| 73 | Anzeigebereich | | |
| 74 | Finger | | |
| 75 | kreisförmige Bewegung | | |
| 76 | ziehende Berührung | | |
| 77 | Bedien- und Einstellanleitung | | |
| 78 | Pop-up Window "Content" | | |
| 79 | Bedien- und Einstellhilfe | | |

## Patentansprüche

1. Elektronische Bedien- und Anzeigeeinheit mit zumindest einem Display und wenigstens einer Bedieneinheit, wobei das Display eine Vielzahl von Visualisierungsbereichen umfasst,
**dadurch gekennzeichnet,**
**dass** das Display (18) in Navigationsebenen (19, 20) betreibbar ist, wobei das Display (18) innerhalb einer Navigationsebene (19, 20) in Visualisierungsbereiche (32, 33, 37, 38, 46, 47) unterteilt ist und zumindest ein Teil der Visualisierungsbereiche (32, 33, 37, 38, 46, 47) relativ zueinander bewegbar sind, wobei ein Teil der Anzeige- und Visualisierungsbereiche (26, 28, 33) in jeder Navigationsebene (19, 20) sichtbar ist und wobei der Visualisierungsbereich (32) der ersten Navigationsebene (19) horizontal scrollbar (34) und der Visualisierungsbereich (37, 38) der zweiten Menüebene (20) vertikal scrollbar (35) ist.

2. Elektronische Bedien- und Anzeigeeinheit nach Anspruch 1,
**dadurch gekennzeichnet,**
**dass** die Bewegbarkeit der Visualisierungsbereiche (32, 33, 37, 38, 46, 47) relativ zueinander ein horizontales und/oder vertikales Scrollen (34 ,35) des jeweiligen Visualisierungsbereiches (32, 33, 37, 38, 46, 47) umfasst.

3. Elektronische Bedien- und Anzeigeeinheit nach Anspruch 2,
**dadurch gekennzeichnet,**
**dass** das Display (18) in einer ersten Navigationsebene (19) zumindest einen Visualisierungsbereich "Arbeitsphase" (32) und einen Visualisierungsbereich "Tool-Menü" (33) umfasst, wobei der Visualbereich "Arbeitsphase" (32) horizontal scrollbar (34) und der Visualisierungsbereich "Tool-Menü" (33) vertikal scrollbar (35) ist.

4. Elektronische Bedien- und Anzeigeeinheit nach Anspruch 3,
**dadurch gekennzeichnet,**
**dass** während des Scrollens (34) des Visualisierungsbereichs "Arbeitsphase" (32) ein Anzeigefeld (36) sichtbar wird welches alle wählbaren Arbeitsphasen (27; 42-45) anzeigt, wobei die jeweils aktivierte Arbeitsphase (27; 42-45) hervorgehoben visualisiert wird.

5. Elektronische Bedien- und Anzeigeeinheit nach einem der Ansprüche 3 oder 4, **dadurch gekennzeichnet,**
**dass** der Visualisierungsbereich "Arbeitsphase" (32) die Arbeitsphasen "Vorbereitung" (42), "Straßenfahrt" (43), "Feldfahrt" (44) und "Vorgewende" (45) umfasst, wobei der Visualisierungsbereich (32) jeder Arbeitsphase (42-45) einen Visualisierungsbereich "Arbeitsphasen Content" (46) und zumindest einen Visualisierungsbereich "Tool-View" (47) umfasst.

6. Elektronische Bedien- und Anzeigeeinheit nach Anspruch 5, **dadurch gekennzeichnet,**
**dass** zumindest die Inhalte der Visualisierungsbereiche "Arbeitsphasen Content" (46) und "Tool-View" (47) in der Weise aneinander gekoppelt sind, dass die Wahl eines konkreten Inhalts im Visualisierungsbereich "Arbeitsphasen Content" (46) zur automatischen Anpassung der Inhalte des Visualisierungsbereichs "Tool-View" (47) und umgekehrt die Wahl eines konkreten Inhalts im Visualisierungsbereich "Tool-View" (47) zu einer selbsttätigen Anpassung der Inhalte des Visualisierungsbereichs "Arbeitsphasen-Content" (46) führt.

7. Elektronische Bedien- und Anzeigeeinheit nach Anspruch 2,
**dadurch gekennzeichnet,**
**dass** das Display (18) in einer zweiten Navigationsebene (20) zumindest einen Visualisierungsbereich "Tool Content" (37), einen Visualisierungsbereich "Tool-Menü" (33) sowie einen Visualisierungsbereich "Tool-Submenü" (38) umfasst und alle Visualisierungsbereiche (33, 37, 38) vertikal scrollbar (35) sind.

8. Elektronische Bedien- und Anzeigeeinheit nach einem der vorhergehenden Ansprüche,
**dadurch gekennzeichnet,**
**dass** das Display (18) als Touchscreen-Monitor (21) ausgebildet ist und die Bewegbarkeit der Visualisierungsbereiche (32, 33, 37, 38, 46, 47) in der jeweiligen Navigationsebene (19, 20) durch Berührung des Touchscreen-Monitors (21) und/oder durch Aktivierung von dem Display (18) zugeordneten Bedienelementen (39) bewirkbar ist.

9. Elektronische Bedien- und Anzeigeeinheit nach Anspruch 8,
**dadurch gekennzeichnet,**
**dass** dem Display (18) ein in allen Navigationsebenen (19, 20) visualisierter Anzeigenbereich (28) zugeordnet ist, der zumindest einen Anzeigebereich "Favoriten" (29) und einen Anzeigebereich "Hotkey" (30) umfasst, wobei im Anzeigebereich "Favoriten" (29) dauerhaft systemrelevante Informationen visualisiert werden und im Anzeigenbereich "Hotkey" (30) navigationsebenenrelevante Informationen durch Aktivierung dieses Anzeigenbereichs (30) visualisierbar sind.

10. Elektronische Bedien- und Anzeigeeinheit nach Anspruch 9,
**dadurch gekennzeichnet,**
**dass** bei Aktivierung des Anzeigebereichs "Hotkey" (30) ein den Visualisierungsbereich "Arbeitsphase" (32) zumindest teilweise überlappendes Pop-up Window "Content" (72) öffnet und die Inhalte dieses Pop-up Windows "Content" (72) durch vertikales Scrollen (35) oder Betätigung von Bedienelementen (39) visualisierbar und sodann editierbar sind.

11. Elektronische Bedien- und Anzeigeeinheit nach einem der vorhergehenden Ansprüche,
**dadurch gekennzeichnet,**
**dass** dem Display (18) eine in allen Navigationsebenen (19, 20) visualisierte Header-Menüleiste (25) zugeordnet ist bei deren Aktivierung unmittelbar der Visualisierungsbereich "Arbeitsphasen" (32) aktiviert wird.

12. Elektronische Bedien- und Anzeigeeinheit nach einem der vorhergehenden Ansprüche,
**dadurch gekennzeichnet,**
**dass** zumindest ein Teil der verfügbaren Visualisierungsbereiche (32, 33, 37, 38, 46, 47) jeder Navigationsebene (19, 20) des Displays (18) in der Weise miteinander gekoppelt sind, dass ein Editieren eines Visualisierungsbereichs (32, 33, 37, 38, 46, 47) ein selbstständiges Anpassen der Inhalte des oder der korrespondierenden Visualisierungsbereiche (32, 33, 37, 38, 46, 47) bewirkt.

13. Elektronische Bedien- und Anzeigeeinheit nach Anspruch 12,
**dadurch gekennzeichnet,**
**dass** ein Berühren eines aktivierten Visualisierungsbereichs (32, 33, 37, 38, 46,47) außerhalb eines den Visualisierungsbereich (32 ,33 ,37, 38, 46,47) beschreibenden Ikons (57) zum Schließen eines aktivierten Auswahlfensters (70) und/oder Pop-up-Windows (50, 63, 78) führt und/oder ein Rücksetzen von durchgeführten Änderungen bewirkt.

14. Elektronische Bedien- und Anzeigeeinheit nach einem der vorhergehenden Ansprüche,
**dadurch gekennzeichnet,**
**dass** die Konfiguration des Displays (18) in zumindest einer der verfügbaren Navigationsebenen (19, 20) editierbar ist.

15. Elektronische Bedien- und Anzeigeeinheit nach Anspruch 14,
**dadurch gekennzeichnet,**
**dass** in der ersten Navigationsebene (19) die Visualisierungsbereiche "Arbeitsphasen-Content" (46) und "Tool-View" (47) eine Vielzahl konfigurierbarer Teilbereiche (46a,b ; 47a-c) umfassen und wobei jeder der Teilbereiche (46a, b ; 47a-c) in der Weise editierbar ist, das der Inhalt eines im Visualisierungsbereich "Tool-Menü" (33) hinterlegten Werkzeugs (50) in den jeweiligen Teilbereich (46a, b ; 47a-c) ziehbar ist.

16. Elektronische Bedien- und Anzeigeeinheit nach Anspruch 15,
**dadurch gekennzeichnet,**
**dass** das gewählte Werkzeug (50) eine Vielzahl von Editieroptionen (54, 55) umfasst, die durch Öffnung eines das Display (18) zumindest teilweise überlappenden Pop-up Windows "Content" (53) aus diesem auswählbar sind.

17. Elektronische Bedien- und Anzeigeeinheit nach Anspruch 16,
**dadurch gekennzeichnet,**
**dass** das Öffnen und Schließen des Pop-up Windows "Content" (53) durch horizontales Bewegen (52) des Pop-up Windows "Content" (53) in das Display (18) und aus diesem heraus bewirkt wird während das Navigieren zwischen wählbaren Editieroptionen (54, 55) durch vertikales Scrollen (35) erfolgt.

18. Elektronische Bedien- und Anzeigeeinheit nach einem der vorhergehenden Ansprüche 3 bis 17, **dadurch gekennzeichnet,**
**dass** nach Aktivierung einer Arbeitsphase (27) im Visualisierungsbereich "Arbeitsphase" (32) eine Vielzahl die Arbeitsphase (27) beschreibende Ikons (57) angezeigt werden und ein Navigieren innerhalb dieser Arbeitsphase 27 und/oder ein Wechsel von der ersten Navigationsebene (19) in die zweite Navigationsebene (20) zumindest durch Aktivierung eines Ikons (57) bewirkt wird.

19. Elektronische Bedien- und Anzeigeeinheit nach Anspruch 18,
**dadurch gekennzeichnet,**
**dass** bei Aktivierung eines Ikons (57) ein das Display (18) zumindest teilweise überlappendes Pop-up Windows "Content" (53) öffnet und die Inhalte dieses Pop-up Windows "Content" (53) zumindest durch vertikales Scrollen (35) visualisierbar und sodann editierbar sind.

20. Elektronische Bedien- und Anzeigeeinheit nach Anspruch 19,
**dadurch gekennzeichnet,**
**dass** das zumindest teilweise überlappende Pop-up Window "Content" (53) durch horizontales Einschieben (52) in den Visualisierungsbereich des Displays (18) visualisiert wird.

21. Elektronische Bedien- und Anzeigeeinheit nach Anspruch 20,
**dadurch gekennzeichnet,**
**dass** das eingeschobene Pop-up Window "Content" (53) ein oder mehrere Ikons (57) umfasst und durch Aktivierung eines der Ikons (57) zumindest ein weiteres Pop-up Window "Content" (63) über dem bereits visualisierten Pop-up Window "Content" (53) positioniert wird, wobei die Inhalte dieses Pop-up Windows "Content" (63) zumindest durch vertikales Scrollen (35) visualisierbar und sodann editierbar sind.

22. Elektronische Bedien- und Anzeigeeinheit nach Anspruch 21,
**dadurch gekennzeichnet,**
**dass** eine Vielzahl weiterer Pop-up Windows "Content" (63) aktivierbar sind, wobei jedes der nachfolgend aktivierten Pop-up Windows "Content" (63) über dem zuvor aktivierten Pop-up Window "Content" (63) durch horizontales Einschieben (52) in den Visualisierungsbereich des Displays (18) positioniert wird.

23. Elektronische Bedien- und Anzeigeeinheit nach einem der Ansprüche 18 bis 22, **dadurch gekennzeichnet,**
**dass** das Ikon (57) einen Parameter (64) einer Arbeitsmaschine (1) repräsentiert und durch Aktivierung des Ikons (57) zumindest ein virtueller Drehschalter (69) am Display (18) angezeigt wird, wobei der virtuelle Drehschalter (69) zur Änderung des Parameters (64) der Arbeitsmaschine (1) editierbar ist.

24. Elektronische Bedien- und Anzeigeeinheit nach Anspruch 23,
**dadurch gekennzeichnet,**
**dass** die Editierbarkeit des virtuellen Drehschalters (69) durch lineares oder kreisförmiges Ziehen eines Markers (65) bewirkt wird und die Aktivierung des Markes (65) mittels der Touchscreen-Funktion oder durch dem Display (18) zugeordnete Bedienelemente (39), vorzugsweise Dreh-Drück-Schalter (40) erfolgt.

25. Elektronische Bedien- und Anzeigeeinheit nach Anspruch 23,
**dadurch gekennzeichnet,**
**dass** die Arbeitsmaschine als landwirtschaftliche Arbeitsmaschine (1) ausgeführt ist und die editierbaren Parameter (64) Maschinenparameter, Qualitätsparameter der landwirtschaftlichen Arbeitsmaschine (1), Qualitätspaarmeter des Erntegutes und Erntegutparameter umfassen können.

26. Elektronische Bedien- und Anzeigeeinheit nach Anspruch 25,
**dadurch gekennzeichnet,**
**dass** der Visualisierungsbereich "Tool-Menü" (33) alle auf der landwirtschaftlichen Arbeitsmaschine (1) verfügbaren Werkzeuge (50) umfasst.

27. Elektronische Bedien- und Anzeigeeinheit nach einem der vorhergehenden Ansprüche 3 bis 26, **dadurch gekennzeichnet,**
**dass** der Visualisierungsbereich "Tool-Menü" (33) ein Werkzeug "Bedien- und Einstellanleitung" (77) umfasst.

28. Elektronische Bedien- und Anzeigeeinheit nach einem der vorhergehenden Ansprüche,
**dadurch gekennzeichnet,**
**dass** das Display (18) als Touchscreen-Monitor (21) ausgeführt ist und der Touchscreen-Monitor (21) bereichsweise zoombar ist.

29. Elektronische Bedien- und Anzeigeeinheit nach einem der vorhergehenden Ansprüche,
**dadurch gekennzeichnet,**
**dass** das Display (18) als Touchscreen-Monitor (21) ausgeführt ist und eine Vielzahl von visualisierten Ikons (57) umfasst und eine zweifingrige (74) eine kreisförmige Bewegung (75) beschreibende Berührung des Touchscreen-Monitors (21) zu einer spiegelbildlichen Darstellung des jeweiligen Ikons (57) führt, wobei die ursprüngliche Darstellung des Ikons (57) erhalten bleibt.

30. Elektronische Bedien- und Anzeigeeinheit nach einem der vorhergehenden Ansprüche,
**dadurch gekennzeichnet,**
**dass** das Display (18) als Touchscreen-Monitor (21) ausgeführt ist und ein zweifingeriges (74) horizontales oder vertikales Scrollen (34, 35) des jeweiligen Visualisierungsbereichs (32, 33, 37, 38, 46, 47) eine Erhöhung der Scroll-Geschwindigkeit bewirkt.

## Claims

1. An electronic operating and display unit comprising at least one display and at least one operating unit, wherein the display includes a plurality of visualisation regions,
**characterised in that**
the display (18) is operable in navigation levels (19, 20), wherein the display (18) is subdivided within a navigation level (19, 20) into visualisation regions (32, 33, 37, 38, 46, 47) and at least a part of the visualisation regions (32, 33, 37, 38, 46, 47) are moveable relative to each other, wherein a part of the display and visualisation regions (26, 28, 33) is visible in each navigation level (19, 20) and wherein the visualisation region (32) of the first navigation level (19) can be horizontally scrolled (34) and the visualisation region (37, 38) of the second menu level (20) can be vertically scrolled (35).

2. An electronic operating and display unit according to claim 1 **characterised in that** the mobility of the visualisation regions (32, 33, 37, 38, 46, 47) relative to each other includes horizontal and/or vertical scrolling (34, 35) of the respective visualisation region (32, 33, 37, 38, 46, 47).

3. An electronic operating and display unit according to claim 2 **characterised in that** the display (8) in a first navigation level (19) includes at least a "working phase" visualisation region (32) and a "tool menu" visualisation region (33), wherein the "working phase" visualisation region (32) can be scrolled horizontally (34) and the "tool menu" visualisation region (33) can be scrolled vertically (35).

4. An electronic operating and display unit according to claim 3 **characterised in that** during scrolling (34) of the "working phase" visualisation region (32) a display field (36) becomes visible, which displays all selectable working phases (27; 42-45), wherein the respectively activated working phase (27; 42-45) is visualised in emphasised fashion.

5. An electronic operating and display unit according to one of claims 3 and 4 **characterised in that** the "working phase" visualisation region (32) includes the working phases "preparation" (42), "on-road travel" (43), "field travel" (44) and "headland" (45), wherein the visualisation region (32) of each working phase (42-45) includes a "working phase content" visualisation region (46) and at least one "tool view" visualisation region (47).

6. An electronic operating and display unit according to claim 5 **characterised in that** at least the contents of the "working phase content" (46) and "tool view" (47) visualisation regions are coupled together in such a way that the selection of a specific content in the "working phase content" visualisation region (46) leads to automatic adaptation of the contents of the "tool view" visualisation region (47) and conversely the selection of a specific content in the "tool view" visualisation region (47) leads to automatic adaptation of the contents of the "working phase content" visualisation region (46).

7. An electronic operating and display unit according to claim 2 **characterised in that** the display (18) in a second navigation level (20) includes at least a "tool content" visualisation region (37), a "tool menu" visualisation region (33) and a "tool submenu" visualisation region (38) and all visualisation regions (33, 37, 38) can be scrolled vertically (35).

8. An electronic operating and display unit according to one of the preceding claims **characterised in that** the display (18) is in the form of a touchscreen monitor (21) and the mobility of the visualisation regions (32, 33, 37, 38, 46, 47) in the respective navigation level is implemented by touching the touchscreen monitor (21) and/or by activating operating elements (39) associated with the display (18).

9. An electronic operating and display unit according to claim 8 **characterised in that** associated with the display (18) is a display region which is visualised in all navigation levels (19, 20) and which includes at least a "favourite" display region (29) and a "hotkey" display region (30), wherein system-relevant information is permanently visualised in the "favourite" display region (29) and navigation level-relevant information can be visualised in the "hotkey" display region (30) by activation of said display region (30).

10. An electronic operating and display unit according to claim 9 **characterised in that** upon activation of the "hotkey" display region (30) a "content" pop-up window (72) which at least partially overlaps the "working phase" visualisation region (32) opens and the contents of said "content" pop-up window (72) can be visualised and then edited by vertical scrolling (35) or by actuating operating elements (39).

11. An electronic operating and display unit according to one of the preceding claims **characterised in that** associated with the display (18) is a header menu bar (25) which is visualised in all navigation levels (19, 20) and upon the activation of which the "working phase" visualisation region (32) is directly activated.

12. An electronic operating and display unit according to one of the preceding claims **characterised in that** at least a part of the available visualisation regions (32, 33, 37, 38, 46, 47) of each navigation level (19, 20) of the display (18) are coupled together in such a way that editing of a visualisation region (32, 33, 37, 38, 46, 47) causes automatic adaptation of the contents of the corresponding visualisation region or regions (32, 33, 37, 38, 46, 47).

13. An electronic operating and display unit according to claim 12 **characterised in that** touching an activated visualisation region (32, 33, 37, 38, 46, 47) outside an icon (57) describing the visualisation region (32, 33, 37, 38, 46, 47) leads to closure of an activated selection window (70) and/or pop-up window (50, 63, 78) and/or causes reset of changes made.

14. An electronic operating and display unit according to one of the preceding claims **characterised in that** the configuration of the display (18) can be edited in at least one of the available navigation levels (19, 20).

15. An electronic operating and display unit according to claim 14 **characterised in that** in the first navigation level (19) the "working phase content" (46) and "tool view" (47) visualisation regions include a plurality of configuratable subregions (46a, b; 47a-c) and wherein each of the subregions (46a, b; 47a-c) can be edited in such a way that the content of a tool (50) stored in the "tool menu" visualisation region (33) can be dragged into the respective subregion (46a, b; 47a-c).

16. An electronic operating and display unit according to claim 15 **characterised in that** the selected tool (50) has a plurality of editing options (54, 55) which by opening of a "content" pop-up window (53) which at least partially overlaps the display (18) can be selected therefrom.

17. An electronic operating and display unit according to claim 16 **characterised in that** opening and closing of the "content" pop-up window (53) is caused by horizontally moving (52) the "content" pop-up window (53) into and out of the display (18) while navigation between selectable editing options (54, 55) is effected by vertical scrolling (35).

18. An electronic operating and display unit according to one of preceding claims 3 to 17 **characterised in that** after activation of a working phase (27) in the "working phase" visualisation region (32) a plurality of icons (57) describing the working phase (27) are displayed and navigation within said working phase (27) and/or a change from the first navigation level (19) to the second navigation level (20) is effected at least by activating an icon (57).

19. An electronic operating and display unit according to claim 18 **characterised in that** upon activation of an icon (57) a "content" pop-up window (53) which at least partially overlaps the display (18) opens and the contents of said "content" pop-up window (53) can visualised and then edited at least by vertical scrolling (35).

20. An electronic operating and display unit according to claim 19 **characterised in that** the at least partially overlapping "content" pop-up window (53) is visualised by horizontal insertion (52) into the visualisation region of the display (18).

21. An electronic operating and display unit according to claim 20 **characterised in that** the inserted "content" pop-up window (53) includes one or more icons (57) and by activating one of the icons (57) at least one further "content" pop-up window (63) is positioned over the already visualised "content" pop-up window (53), wherein the contents of said "content" pop-up window (63) can be visualised and then edited at least by vertical scrolling (35).

22. An electronic operating and display unit according to claim 21 **characterised in that** a plurality of further "content" pop-up windows (63) can be activated, wherein each of the subsequently activated "content" pop-up windows (63) is positioned over the previously activated "content" pop-up window (63) by horizontal insertion (52) into the visualisation region of the display (18).

23. An electronic operating and display unit according to one of claims 18 to 22 **characterised in that** the icon (57) represents a parameter (64) of a working machine (1) and by activation of the icon (57) at least one virtual rotary switch (69) is displayed on the display, wherein the virtual rotary switch (69) can be edited to change the parameter (64) of the working machine (1).

24. An electronic operating and display unit according to claim 23 **characterised in that** editability of the virtual rotary switch (69) is implemented by linear or circular dragging of a marker (65) and activation of the marker (65) is effected by means of the touchscreen function or by operating elements (39) associated with the display (18), preferably turn-and-press switches (40).

25. An electronic operating and display unit according to claim 23 **characterised in that** the working machine is in the form of an agricultural working machine (1) and the editable parameters (64) can include machine parameters, quality parameters of the agricultural working machine (1), quality parameters of the crop material and crop material parameters.

26. An electronic operating and display unit according to claim 25 **characterised in that** the "tool menu" visualisation region (33) includes all tools (50) available on the agricultural working machine (1).

27. An electronic operating and display unit according to one of preceding claims 3 to 26 **characterised in that** the "tool menu" visualisation region (33) includes an "operating and set-up instruction" tool (77).

28. An electronic operating and display unit according to one of the preceding claims **characterised in that** the display (18) is in the form of a touchscreen monitor (21) and the touchscreen monitor (21) can be region-wise zoomed.

29. An electronic operating and display unit according to one of the preceding claims **characterised in that** the display (18) is in the form of a touchscreen monitor (21) and includes a plurality of visualised icons (57) and touching the touchscreen monitor (21) with two fingers (74) to describe a circular movement (75) leads to mirror-image representation of the respective icon (57), wherein the original representation of the icon (57) is maintained.

30. An electronic operating and display unit according to one of the preceding claims **characterised in that** the display (18) is in the form of a touchscreen monitor (21) and horizontal or vertical scrolling (34, 35) with two fingers (74) of the respective visualisation region (32, 33, 37, 38, 46, 47) causes an increase in the scrolling speed.

## Revendications

1. Unité électronique d'utilisation et d'affichage comprenant au moins un affichage et au moins une unité d'utilisation, l'affichage comportant une pluralité de zones de visualisation, **caractérisée en ce que** l'affichage (18) est exploitable dans des plans de navigation (19, 20), l'affichage (18) étant divisé, à l'intérieur d'un plan de navigation (19, 20) en zones de visualisation (32, 33, 37, 38, 46, 47) et au moins une partie des zones de visualisation (32, 33, 37, 38, 46, 47) étant déplaçables les unes par rapport aux autres, une partie des zones d'affichage et de visualisation (26, 28, 33) étant visible dans chaque plan de navigation (19, 20), et la zone de visualisation (32) du premier plan de navigation (19) étant défilante horizontalement (34) et la zone de visualisation (37, 38) du second plan de menu (20) étant défilante verticalement (35).

2. Unité électronique d'utilisation et d'affichage 1, **caractérisée en ce que** la possibilité de déplacement des zones de visualisation (32, 33, 37, 38, 46, 47) les unes par rapport aux autres inclut un défilement horizontal et/ou vertical (34, 35) de la zone de visualisation correspondante (32, 33, 37, 38, 46, 47).

3. Unité électronique d'utilisation et d'affichage selon la revendication 2, **caractérisée en ce que** l'affichage (18) dans un premier plan de navigation (19) inclut au moins une zone de visualisation « Arbeitsphase » (« phase de travail ») (32) et une zone de visualisation « Tool-Menü » (« menu outils ») (33), la zone visuelle « Arbeitsphase » (32) étant défilante horizontalement (34) et la zone de visualisation « Tool-Menü » (33) étant défilante verticalement (35).

4. Unité électronique d'utilisation et d'affichage selon la revendication 3, **caractérisée en ce que** pendant le défilement (34) de la zone de visualisation « Arbeitsphase » (32) apparaît un champ d'affichage (36) qui affiche toutes les phases de travail sélectionnables (27 ; 42-45), la phase de travail activée (27 ; 42-45) étant visualisée en surbrillance.

5. Unité électronique d'utilisation et d'affichage selon une des revendications 3 ou 4, **caractérisée en ce que** la zone de visualisation « Arbeitsphase » (32) inclut les phases de travail « Vorbereitung » (« préparation ») (42), « Straßenfahrt » (« marche sur route ») (43), « Feldfahrt » (« marche en champ ») (44) et « Vorgewende » (« tournière ») (45), la zone de visualisation (32) de chaque phase de travail (42-45) incluant une zone de visualisation « Arbeitsphasen Content » (« contenu phase de travail ») (46) et au moins une zone de visualisation « Tool-View » (« vue outils ») (47).

6. Unité électronique d'utilisation et d'affichage selon la revendication 5, **caractérisée en ce qu'**au moins les contenus des zones de visualisation « Arbeitsphasen Content » (46) et « Tool-View » (47) sont couplés entre eux, de sorte que le choix d'un contenu concret dans la zone de visualisation « Arbeitsphasen Content » (46) provoque une adaptation automatique des contenus de la zone de visualisation « Tool-View » (47) et, inversement, que le choix d'un contenu concret dans la zone de visualisation « Tool-View » (47) provoque une adaptation automatique des contenus de la zone de visualisation « Arbeitsphasen Content » (46).

7. Unité électronique d'utilisation et d'affichage selon la revendication 2, **caractérisée en ce que** l'affichage (18) dans un second plan de navigation (20) inclut au moins une zone de visualisation « Tool Content » (« contenu outils ») (37), une zone de visualisation « Tool-Menü » (33) ainsi qu'une zone de visualisation « Tool-Submenü » (« sous-menu outils ») (38), et toutes les zones de visualisation (33, 37, 38) sont défilantes verticalement (35).

8. Unité électronique d'utilisation et d'affichage selon une des revendications précédentes, **caractérisée en ce que** l'affichage (18) est conformé en moniteur à écran tactile (21) et la possibilité de déplacement des zones de visualisation (32, 33, 37, 38, 46, 47) dans le plan de navigation correspondant (19, 20) est réalisable en touchant le moniteur à écran tactile (21) et/ou en activant des éléments d'utilisation (39) associés à l'affichage (18).

9. Unité électronique d'utilisation et d'affichage selon la revendication 8, **caractérisée en ce qu'**à l'affichage (18) est associée une zone d'affichage (28) qui est visualisée dans tous les plans de navigation (19, 20) et qui inclut au moins une zone d'affichage « Favoriten » (« favoris ») (29) et une zone d'affichage « Hotkey » (« raccourci ») (30), dans la zone d'affichage « Favoriten » (29) étant visualisables des informations durablement pertinentes pour le système et dans la zone d'affichage « Hotkey » (30) étant visualisables des informations pertinentes pour des plans de navigation en actionnant cette zone d'affichage (30).

10. Unité électronique d'utilisation et d'affichage selon la revendication 9, **caractérisée en ce que**, en actionnant la zone d'affichage « Hotkey » (30), une fenêtre contextuelle « Content » (« contenu ») (72) recouvrant au moins partiellement la zone de visualisation « Arbeitsphase » (32) s'ouvre et les contenus de cette fenêtre contextuelle « Content » (72) sont visualisables par défilement vertical (35) ou par actionnement d'éléments d'utilisation (39) et ensuite modifiables.

11. Unité électronique d'utilisation et d'affichage selon une des revendications précédentes, **caractérisée en ce qu'**à l'affichage (18) est associée une barre d'en-tête de menu (25) qui est visualisée dans tous les plans de navigation (19, 20) et dont l'activation active directement la zone de visualisation « Arbeitsphasen » (32).

12. Unité électronique d'utilisation et d'affichage selon une des revendications précédentes, **caractérisée en ce qu'**au moins une partie des zones de visualisation disponibles (32, 33, 37, 38, 46, 47) de chaque plan de navigation (19, 20) de l'affichage (18) sont couplées entre elles, de façon qu'une modification d'une zone de visualisation (32, 33, 37, 38, 46, 47) provoque une adaptation automatique des contenus de la ou des zones de visualisation correspondantes (32, 33, 37, 38, 46, 47).

13. Unité électronique d'utilisation et d'affichage selon la revendication 12, **caractérisée en ce qu'**un toucher d'une zone de visualisation activée (32, 33, 37, 38, 46, 47) à l'extérieur d'une icône (57) décrivant la zone de visualisation (32, 33, 37, 38, 46, 47) provoque la fermeture d'une fenêtre de sélection activée (70) et/ou d'une fenêtre contextuelle (50, 63, 78) et/ou une remise à zéro des modifications effectuées.

14. Unité électronique d'utilisation et d'affichage selon une des revendications précédentes, **caractérisée en ce que** la configuration de l'affichage (18) est modifiable dans au moins un des plans de navigation disponibles (19, 20).

15. Unité électronique d'utilisation et d'affichage selon la revendication 14, **caractérisée en ce que**, dans le premier plan de navigation (19), les zones de visualisation « Arbeitsphasen Content » (46) et « Tool-View » (47) incluent une pluralité de sous-zones configurables (46a,b ; 47a-c), et chacune des sous-zones (46a,b ; 47a-c) étant modifiable de façon que le contenu d'un outil (50) mémorisé dans la zone de visualisation « Tool-Menü » (33) soit transférable dans la sous-zone correspondante (46a,b ; 47a-c).

16. Unité électronique d'utilisation et d'affichage selon la revendication 15, **caractérisée en ce que** l'outil (50) sélectionné inclut une pluralité d'options de modification (54, 55) qui sont sélectionnables, après l'avoir ouverte, dans une fenêtre contextuelle « Content » (53) recouvrant au moins partiellement l'affichage (18).

17. Unité électronique d'utilisation et d'affichage selon la revendication 16, **caractérisée en ce que** l'ouverture et la fermeture de la fenêtre contextuelle « Content » (53) est réalisée par déplacement horizontal (52) de la fenêtre contextuelle « Content » (53) dans l'affichage (18) et hors de celui-ci pendant que se déroule la navigation entre des options de modification sélectionnables (54, 55) par défilement vertical (35).

18. Unité électronique d'utilisation et d'affichage selon une des revendications précédentes 3 à 17, **caractérisée en ce qu'**après activation d'une phase de travail (27) apparaît dans la zone de visualisation « Arbeitsphase » (32) une pluralité d'icônes (57) décrivant la phase de travail (27), et une navigation à l'intérieur de cette phase de travail 27 et/ou un passage du premier plan de navigation (19) au second plan de navigation (20) est réalisé au moins par activation d'une icône (57).

19. Unité électronique d'utilisation et d'affichage selon la revendication 18, **caractérisée en ce que** lors de l'activation d'une icône (57) s'ouvre une fenêtre contextuelle « Content » (53) recouvrant au moins partiellement l'affichage (18), et les contenus de cette fenêtre contextuelle « Content » (53) sont visualisables au moins par défilement vertical (35) et ensuite modifiables.

20. Unité électronique d'utilisation et d'affichage selon la revendication 19, **caractérisée en ce que** la fenêtre contextuelle « Content » recouvrant au moins partiellement (53) est visualisée par insertion horizontale (52) dans la zone de visualisation de l'affichage (18).

21. Unité électronique d'utilisation et d'affichage selon la revendication 20, **caractérisée en ce que** la fenêtre contextuelle « Content » insérée (53) inclut une ou plusieurs icônes (57) et, par activation d'une des icônes (57), au moins une autre fenêtre contextuelle « Content » (63) est positionnée par-dessus la fenêtre contextuelle « Content » (53) déjà visualisée, les contenus de cette fenêtre contextuelle « Content » (63) étant visualisables au moins par défilement vertical (35) et ensuite modifiables.

22. Unité électronique d'utilisation et d'affichage selon la revendication 21, **caractérisée en ce qu'**une pluralité d'autres fenêtres contextuelles « Content » (63) est positionnée par-dessus la fenêtre contextuelle « Content » préalablement activée (63) par insertion horizontale (52) dans la zone de visualisation de l'affichage (18).

23. Unité électronique d'utilisation et d'affichage selon une des revendications 18 à 22, **caractérisée en ce que** l'icône (57) représente un paramètre (64) d'un engin de travail (1), et l'activation de l'icône (57) fait apparaître sur l'affichage (18) au moins un interrupteur rotatif virtuel (69), l'interrupteur rotatif virtuel (69) étant modifiable pour modifier le paramètre (64) de l'engin de travail (1).

24. Unité électronique d'utilisation et d'affichage selon la revendication 23, **caractérisée en ce que** la possibilité de modifier l'interrupteur rotatif virtuel (69) est réalisée par un glissement linéaire ou circulaire d'un repère (65), et l'activation du repère (65) s'effectue au moyen de la fonction d'écran tactile ou par l'intermédiaire d'éléments d'utilisation (39) associés à l'affichage (18), de préférence d'interrupteurs pousser-tourner (40).

25. Unité électronique d'utilisation et d'affichage selon la revendication 23, **caractérisée en ce que** l'engin de travail est conformé en engin de travail agricole (1), et les paramètres modifiables (64) peuvent inclure des paramètres machine, des paramètres qualité de l'engin de travail agricole (1), des paramètres qualité du produit récolté et des paramètres du produit récolté.

26. Unité électronique d'utilisation et d'affichage selon la revendication 25, **caractérisée en ce que** la zone de visualisation « Tool-Menü » (33) inclut tous les outils (50) disponibles sur l'engin de travail agricole (1).

27. Unité électronique d'utilisation et d'affichage selon une des revendications précédentes 3 à 26, **caractérisée en ce que** la zone de visualisation « Tool-Menü » (33) inclut une « Werkzeug "Bedien-und Einstellanleitung" » (« "instruction d'utilisation et de réglage" d'outil ») (77).

28. Unité électronique d'utilisation et d'affichage selon une des revendications précédentes, **caractérisée en ce que** l'affichage (18) est conformé en moniteur à écran tactile (21), et le moniteur à écran tactile (21) est zoomable par endroits.

29. Unité électronique d'utilisation et d'affichage selon une des revendications précédentes, **caractérisée en ce que** l'affichage (18) est conformé en moniteur à écran tactile (21) et inclut une pluralité d'icônes visualisées (57), et un toucher à deux doigts (74), décrivant un mouvement circulaire (75), du moniteur à écran tactile (21) provoque une représentation inversée de l'icône concernée (57), la représentation inversée de l'icône (57) restant conservée.

30. Unité électronique d'utilisation et d'affichage selon une des revendications précédentes, **caractérisée en ce que** l'affichage (18) est conformé en moniteur à écran tactile (21), et un défilement horizontal ou vertical à deux doigts (34, 35) de la zone de visualisation concernée (32, 33, 37, 38, 46, 47) provoque une élévation de la vitesse de défilement.
